# EUROPEAN PATENT SPECIFICATION

(11) **EP 4 535 628 B1**
(45) Date of publication and mention of the grant of the patent: **20.05.2026**
(21) Application number: 24737290.7
(22) Date of filing: 14.06.2024
(51) Int. Cl.: H02K 15/02, H01F 41/02, H02K 15/0273

(54) **LAMINATION METHOD FOR ADHESIVE-TYPE IRON CORE, AND PRODUCTION EQUIPMENT AND ADHESIVE-TYPE LAMINATED IRON CORE**
LAMINIERUNGSVERFAHREN FÜR EINEN KLEBSTOFF-EISENKERN SOWIE HERSTELLUNGSAUSRÜSTUNG UND KLEBSTOFF-LAMINIERTER EISENKERN
PROCÉDÉ DE STRATIFICATION POUR NOYAU DE FER DE TYPE ADHÉSIF, ET ÉQUIPEMENT DE PRODUCTION ET NOYAU DE FER STRATIFIÉ DE TYPE ADHÉSIF

(30) Priority: 22.08.2023 CN 202311054885
(43) Date of publication of application: 09.04.2025
(73) Proprietor: Suzhou Fine-Stamping Machinery Technology Co., Ltd., Suzhou, Jiangsu 215009 (CN)
(72) Inventor: YANG, Bo, Suzhou, Jiangsu 215009 (CN); XIANG, Yuan, Suzhou, Jiangsu 215009 (CN); YANG, Renyi, Suzhou, Jiangsu 215009 (CN); SUN, Yinping, Suzhou, Jiangsu 215009 (CN); YING, Xuanmin, Suzhou, Jiangsu 215009 (CN); ZHAO, Wei, Suzhou, Jiangsu 215009 (CN); WANG, Hongbo, Suzhou, Jiangsu 215009 (CN); HUANG, Xiudong, Suzhou, Jiangsu 215009 (CN)
(74) Representative: Goddar, Heinz J.
(86) International application number: PCT/CN2024/099180
(87) International publication number: WO 2025/039689

(56) References cited:
- EP-B1- 1 833 145
- WO-A1-2023/073770
- CN-A- 107 466 437
- CN-A- 107 533 907
- CN-A- 107 533 907
- CN-A- 110 793 619
- CN-A- 110 793 619
- CN-A- 115 632 528
- CN-A- 115 632 528
- CN-A- 116 780 839
- JP-A- 2015 076 970
- US-A1- 2022 006 336

## Description

### TECHNICAL FIELD

The present invention relates to the field of motor core manufacturing technologies, and specifically to a lamination method for an adhesively laminated core, a production device for an adhesively laminated core, an adhesively laminated core.

### BACKGROUND

Currently, an adhesively laminated core appearing on the market, in particular, an adhesively laminated core for a driving motor of a new energy vehicle is formed from a plurality of core sheets by using a production device, and the plurality of core sheets are bonded to each other by using adhesive coating surfaces of the core sheets in advance to form the adhesively laminated core.

In an existing adhesively laminated core production device, for example, in an apparatus and a method for manufacturing an adhesively laminated motor core disclosed in the publication No. CN114884292B, a manner in which a catalyst is sprayed over a large area on a material strip before entering a continuous blanking mold and adhesive is dispensed in the mold by using an adhesive spraying mechanism is used. Core sheets are laminated on each other by mixing the catalyst and glue. Although the manufacturing apparatus can thoroughly mix the catalyst and the glue to improve firmness and reliability of the bonding, the spraying the catalyst over a large area results in increased costs to some extent. In addition, if the catalyst overflows from the outer contour of the core sheet material, the catalyst may adhere to the mold that undergoes contour punching after being coated with the catalyst, or become a cause of pollution caused by the mold, which may harm a normal operation of the mold. In addition, the adhesive spraying mechanism in the manufacturing apparatus uses an air pressure spraying manner. Although quantitative adhesive spraying is implemented, frequent changes in the air pressure also easily cause air pressure instability during the adhesive dispensing process, which still affects the accuracy of the adhesive dispensing.

For another example, in a method for manufacturing a laminated core and an apparatus for manufacturing a laminated core disclosed in the publication No. CN110100377B, a temporary lamination process and a formal lamination process are arranged. After a laminated body is formed in a mold, core components are bonded and laminated outside the mold. Although the apparatus avoids various problems that may occur when the adhesive is supplied to the metal sheet in the mold, the out-of-mold lamination increases production processes of the laminated core to a certain extent, reduces the production efficiency of the laminated core, and cannot ensure the adhesive dispensing accuracy and the lamination accuracy of the laminated core.

Therefore, it is necessary to provide a new manner to resolve the foregoing technical problems.

WO 2023/073770 A1 discloses a lamination method for an adhesively laminated core using a piezoelectric adhesive ejection device.

### SUMMARY

In view of the disadvantages of the related art, an objective of the present invention is to provide a production method for laminated core adhesive. The method replaces the conventional manner of comprehensively spraying a first binding agent. In an aspect, the problems of waste and increased costs caused by comprehensive spraying are solved. In another aspect, glue entry is controlled by a current, and a magnitude of the current is controlled to control an adhesive spraying amount of a piezoelectric adhesive spraying apparatus. In addition, since the magnitude of the current can be accurately controlled, a size of an adhesive point can be controlled and can be made very small within a specific range. A stable current can further ensure size consistency and shape regularity of adhesive points, thereby effectively avoiding a problem of adhesive overflow of a product.

Technical solutions of the present invention are summarized as follows:
A first objective of the present invention is to provide a lamination method for an adhesively laminated core according to claim 1. A second objective of the present invention is to provide an adhesively laminated core according to claim 8. A third objective of the present invention is to provide a production device according to claim 9. Advantageous embodiments are defined in the dependent claims.

Compared with the related art, beneficial effects of the present invention are as follows:
The present invention provides a production method for laminated core adhesive. The method includes steps: blanking a continuous core sheet material before a material-drop process; determining whether a first adhesive spraying signal exists; parsing, if the first adhesive spraying signal exists, the first adhesive spraying signal, to obtain, in the first adhesive spraying signal, a voltage value representing each adhesive spraying opening of a piezoelectric adhesive spraying apparatus; configuring the voltage value for the adhesive spraying opening, to form an electric field with a corresponding voltage value configured at a deformation portion of the adhesive spraying opening; and controlling, according to the electric field, the deformation portion to deform, and pressing a binding agent in the adhesive spraying opening, to supply a first binding agent to a first surface of the core sheet material facing a material-drop female mold in a blanking station before material-drop, where the first binding agent is used to form a binding force for laminating cores on each other. In the present invention, the first binding agent is supplied to the first surface of the core sheet material in a piezoelectric adhesive spraying manner, to replace the conventional manner of comprehensively spraying the first binding agent. In an aspect, the problems of waste and increased costs caused by comprehensive spraying are solved. In another aspect, glue entry is controlled by a voltage value, and a voltage value configured for each adhesive spraying opening is controlled to control an adhesive spraying amount of a piezoelectric adhesive spraying apparatus. In addition, since the magnitude of the voltage value can be accurately controlled, a size of an adhesive point can be controlled and can be made very small within a specific range. A stable voltage can further ensure size consistency and shape regularity of adhesive points, thereby effectively avoiding a problem of adhesive overflow of a product, to facilitate production, popularization, and application of the laminated core.

The foregoing descriptions are merely an outline of the technical solutions of the present invention. To understand the technical means of the present invention more clearly and implement the technical means according to the content of the specification, description is made below in detail through preferred embodiments of the present invention and with reference to the accompanying drawings. Specific implementations of the present invention are given in detail by the following embodiments and accompanying drawings thereof.

### BRIEF DESCRIPTION OF THE DRAWINGS

The accompanying drawings described herein are intended to provide further understanding of the present invention and constitute a part of this application. Exemplary embodiments of the present invention and the description thereof are used for explaining the present invention rather than constituting the improper limitation to the present invention. In the accompanying drawings:
FIG. 1 is a first schematic flowchart of a lamination method for an adhesively core according to Embodiment 1 of the present invention.
FIG. 2 is a second schematic flowchart of a lamination method for an adhesively core not according to the invention.
FIG. 3 is a third schematic flowchart of a lamination method for an adhesively core according to Embodiment 1 of the present invention.
FIG. 4 is a first schematic flowchart of a lamination method for an adhesively core according to Embodiment 2 of the present invention.
FIG. 5 is a second schematic flowchart of a lamination method for an adhesively core not according to the invention.
FIG. 6 is a schematic diagram of an overall structure of a production device for an adhesively laminated core according to the present invention;
FIG. 7 is a schematic diagram of a specific structure of an adhesive spraying opening of a piezoelectric adhesive spraying apparatus according to the present invention;
FIG. 8 is a schematic diagram of a mounting structure of an upper mold assembly and a material-drop male mold according to the present invention;
FIG. 9 is a schematic diagram of a mounting structure of a material-drop male mold and a second piezoelectric adhesive spraying structure according to the present invention;
FIG. 10 is a schematic diagram of a mounting structure of a lower mold assembly and a material-drop female mold according to the present invention;
FIG. 11 is a schematic diagram of a mounting structure of a material-drop female mold and a first piezoelectric adhesive spraying structure according to the present invention;
FIG. 12 is a schematic diagram of a control manner of a control unit according to the present invention;
(a) of FIG. 13 is a diagram of a mold opening state of a production device for an adhesively laminated core according to Embodiment 5 of the present invention;
(b) of FIG. 13 is a diagram of a mold closing state of the production device for an adhesively laminated core according to Embodiment 5 of the present invention;

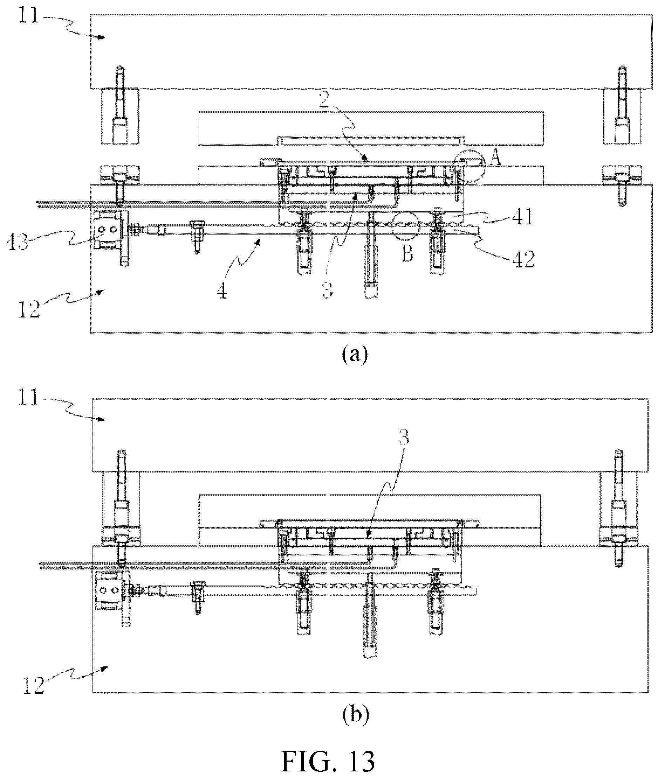

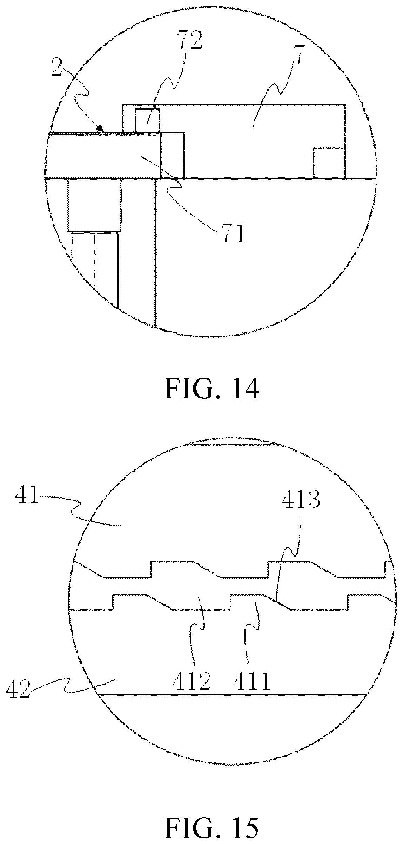

FIG. 14 is an enlarged view at A of FIG. 13;
FIG. 15 is an enlarged view at B of FIG. 13;

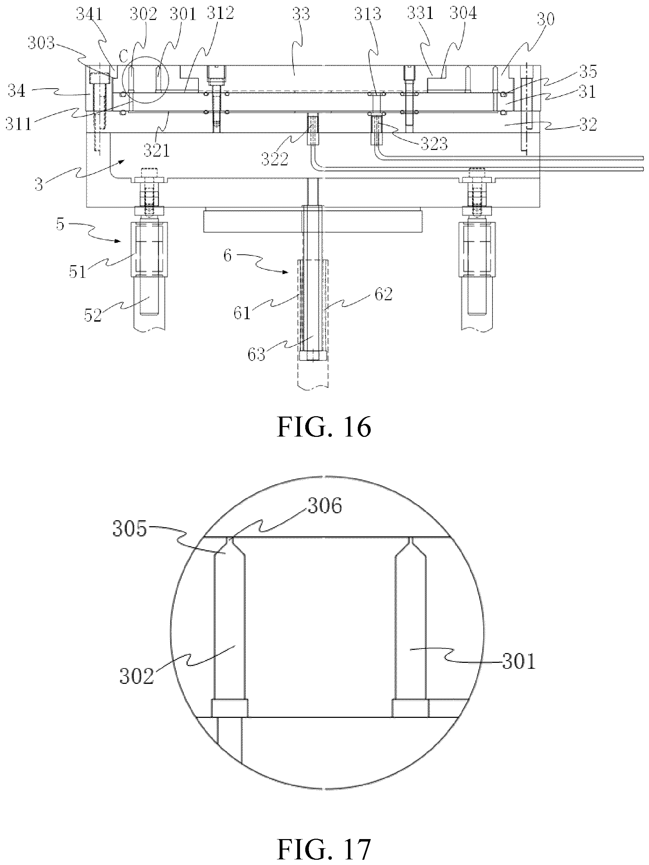

FIG. 16 is a schematic diagram of a structure of an adhesive spraying apparatus according to Embodiment 5 of the present invention;
FIG. 17 is an enlarged view at C of FIG. 16;

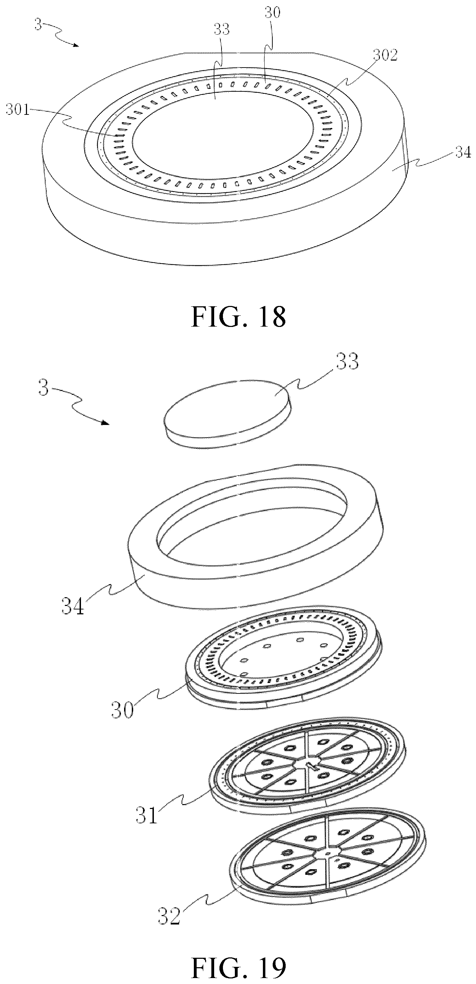

FIG. 18 is a schematic diagram of an overall structure of an adhesive spraying assembly according to Embodiment 5 of the present invention;
FIG. 19 is a schematic diagram of an exploded structure of an adhesive spraying assembly according to Embodiment 5 of the present invention;

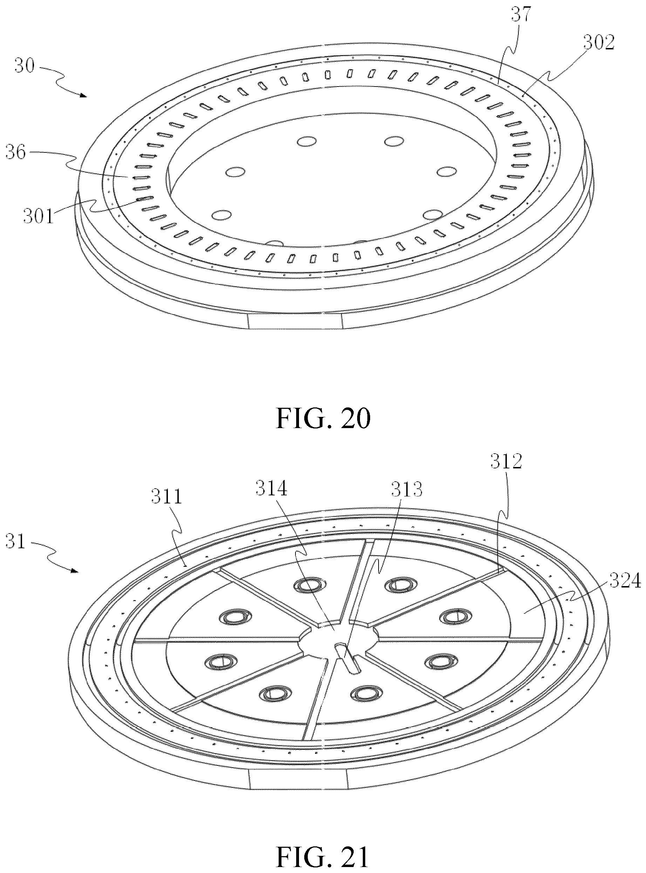

FIG. 20 is a schematic diagram of a structure of an adhesive spraying plate according to Embodiment 5 of the present invention;
FIG. 21 is a schematic diagram of a structure of a first mold plate according to Embodiment 5 of the present invention;

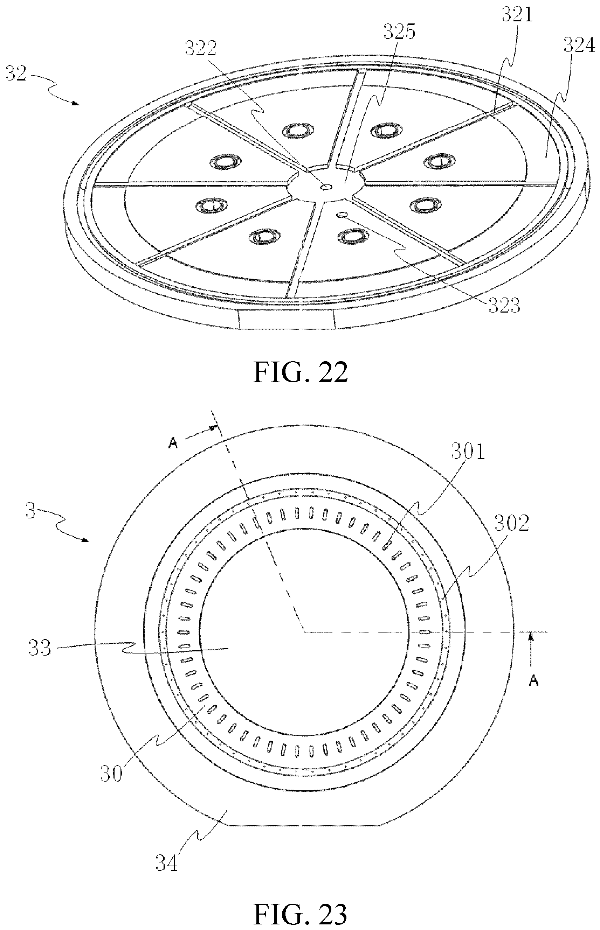

FIG. 22 is a schematic diagram of a structure of a second mold plate according to Embodiment 5 of the present invention;
FIG. 23 is a front view of an adhesive spraying assembly according to Embodiment 5 of the present invention;

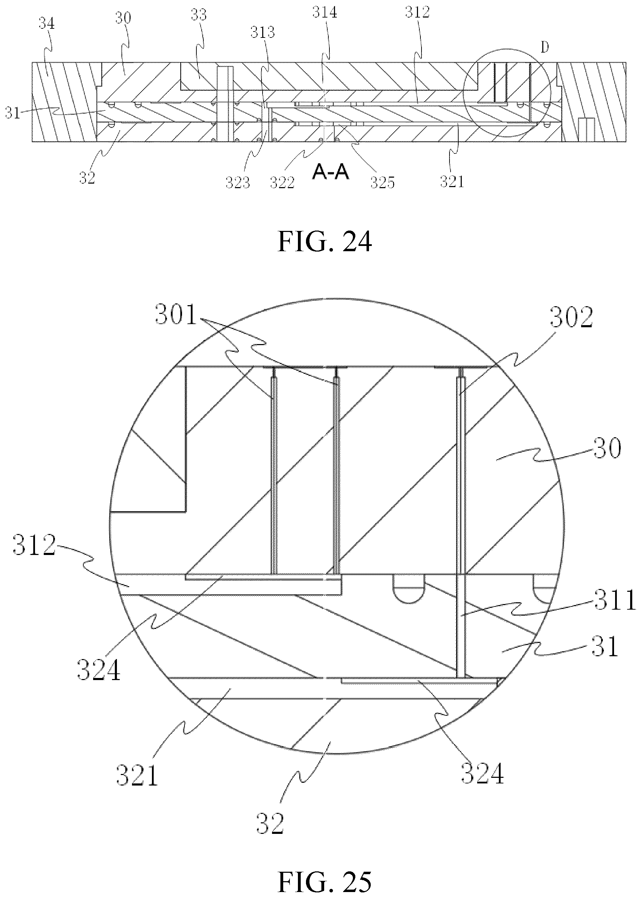

FIG. 24 is a rotary cross-sectional view of A-A in FIG. 23;
FIG. 25 is an enlarged view at D of FIG. 24;

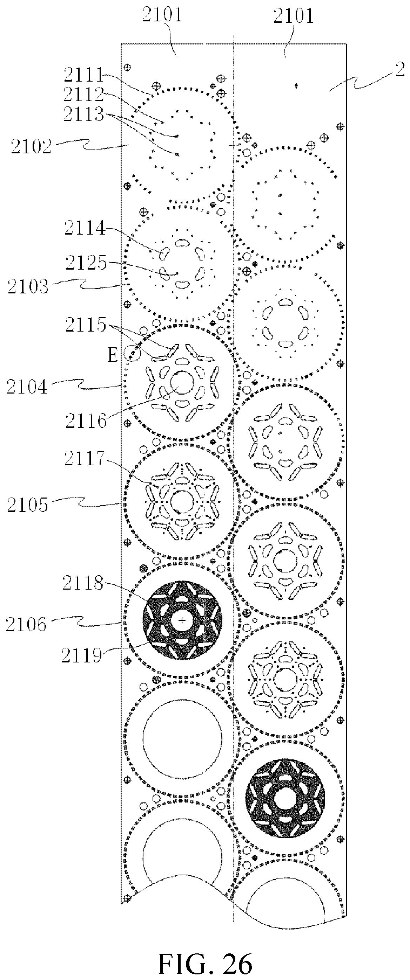

FIG. 26 is a first schematic diagram of a blank layout for production of a laminated core of a rotor and a laminated core of a stator according to Embodiment 6 of the present invention;

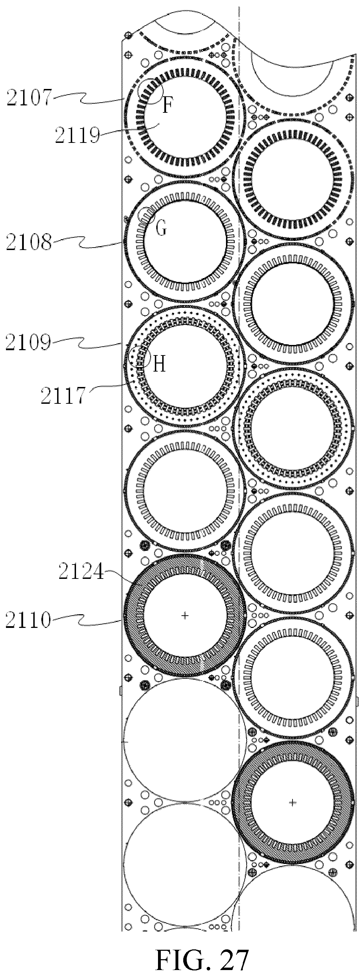

FIG. 27 is a second schematic diagram of a blank layout for production of a laminated core of a rotor and a laminated core of a stator according to Embodiment 6 of the present invention;

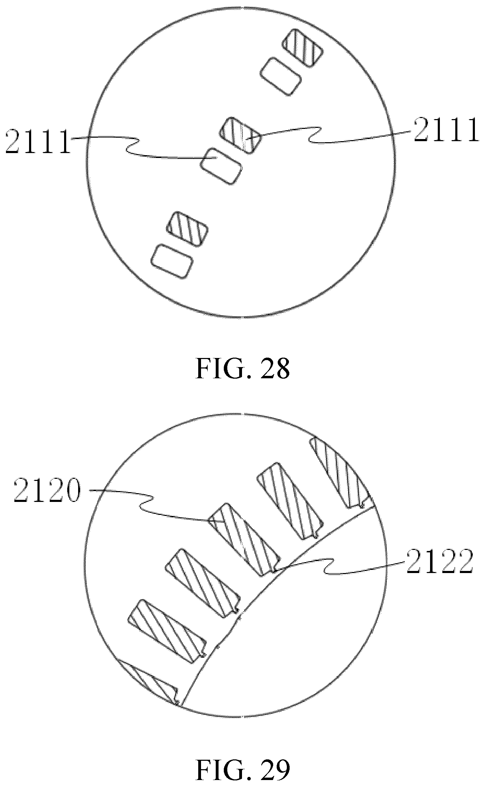

FIG. 28 is an enlarged view at E of FIG. 26;
FIG. 29 is an enlarged view at F of FIG. 27;

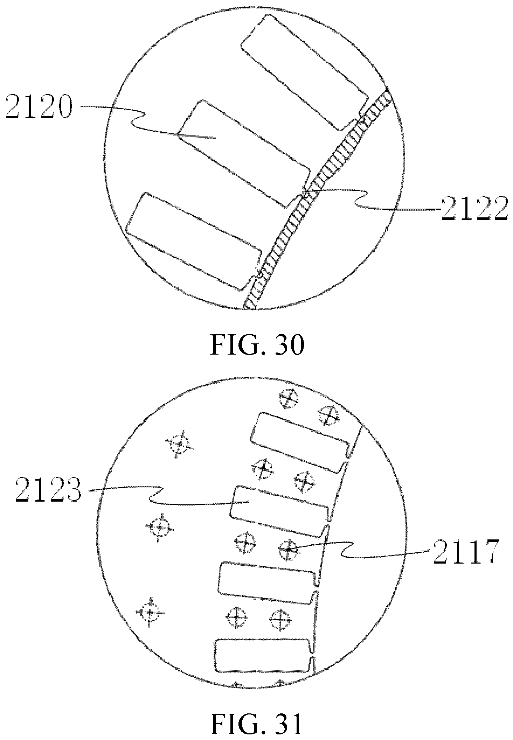

FIG. 30 is an enlarged view at G of FIG. 27; and
FIG. 31 is an enlarged view at H of FIG. 27.

In the drawings: 1. Production device;
10. Blanking unit; 11. Upper mold assembly; 111. Material-drop male mold; 112. Second adhesive inlet; 12. Lower mold assembly; 121. Material-drop female mold; 122. First adhesive inlet; 13. Single-module control board;
20. Piezoelectric adhesive spraying apparatus; 201. First piezoelectric adhesive spraying structure; 202. Second piezoelectric adhesive spraying structure; 203. Adhesive sleeve; 21. Adhesive spraying opening; 211. Piezoelectric element; 212. Adhesive storage bin; 213. Piezoelectric nozzle; 2131. Adhesive outlet;
3. Adhesive spraying apparatus; 30. Adhesive spraying plate; 301. First adhesive spraying opening; 302. Second adhesive spraying opening; 303. Step; 331. Second boss; 305. Cone cavity; 306. Straight channel; 31. First mold plate; 311. Transition channel; 312. First shunting channel; 313. First adhesive entry channel; 314. First shunting cavity; 32. Second mold plate; 321. Second shunting channel; 322. Second adhesive entry channel; 323. Third adhesive entry channel; 324. Communication slot; 325. Second shunting cavity; 33. Mandrel pressing plate; 304. First boss; 34. Insertion ring; 341. Protrusion; 35. Rubber seal ring; 36. First adhesive spraying region; 37. Second adhesive spraying region;
4. Lifting apparatus; 41. Extraction plate cushion block; 411. Matching tooth block; 412. Matching slot; 413. Slope; 42. Extraction plate; 43. Air cylinder;
5. Guide assembly; 51. Guide sleeve; 52. Guide post;
6. Reset assembly; 61. Sleeve; 62. Spring; 63. Pillar;
7. Side guide plate; 71. Positioning slot; 72. Magnet;
2. Core sheet material; 2101. Blanking and forming region; 2102. First forming station; 2103. Second forming station; 2104. Third forming station; 2105. First adhesive spraying station; 2106. First material-drop station; 2107. Fourth forming station; 2108. Fifth forming station; 2109. Second adhesive spraying station; 2110. Second material-drop station; 2111. Stator square slot; 2112. First notch forming hole; 2113. Second notch forming hole; 2114. Vent hole; 2115. Rotor magnetic steel slot; 2116. Rotor center hole; 2117. Adhesive point; 2118. Rotor core sheet; 2119. Material-drop hole; 2120. Slot-shaped hole; 2122. Elongated hole; 2123. Stator slot shape; 2124. Stator core sheet; 2125. Third notch forming hole.

### DETAILED DESCRIPTION

The following clearly and completely describes the technical solutions in the embodiments of the present invention with reference to the accompanying drawings in the embodiments of the present invention. Apparently, the described embodiments are some of the embodiments of the present invention rather than all of the embodiments.

In the accompanying drawings, shapes and sizes may be exaggerated for clarity, and the same reference numerals are used in all the drawings to indicate the same or similar components.

In the following description, terms such as center, thickness, height, length, front, back, rear, left, right, top, bottom, upper, and lower are defined relative to the configurations shown in the accompanying drawings. Specifically, "height" is equivalent to a dimension from top to bottom, "width" is equivalent to a dimension from left to right, and "depth" is equivalent to a dimension from front to back. They are relative concepts, and therefore may change correspondingly according to different positions or different usage states. Therefore, these or other orientations should not be construed as limiting terms.

Terms related to attachment, coupling, and the like (for example, "connected" and "attached") refer to a relationship in which these structures are directly or indirectly fixed or attached to each other through an intermediate structure, and movable or rigid attachment or relationship, unless otherwise explicitly specified.

### Embodiment 1

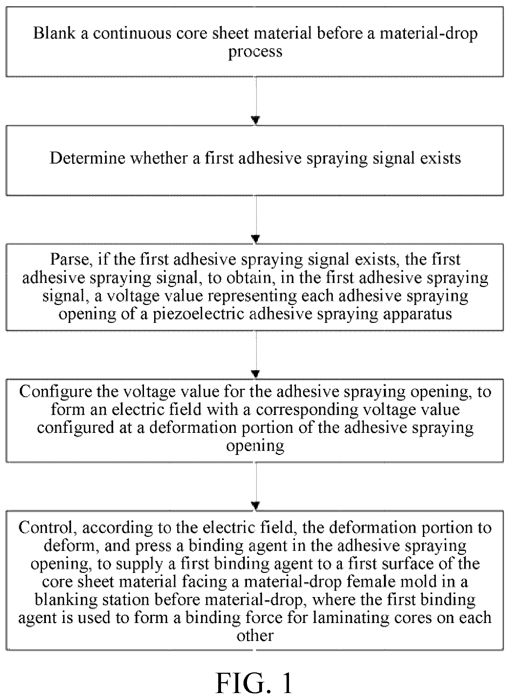

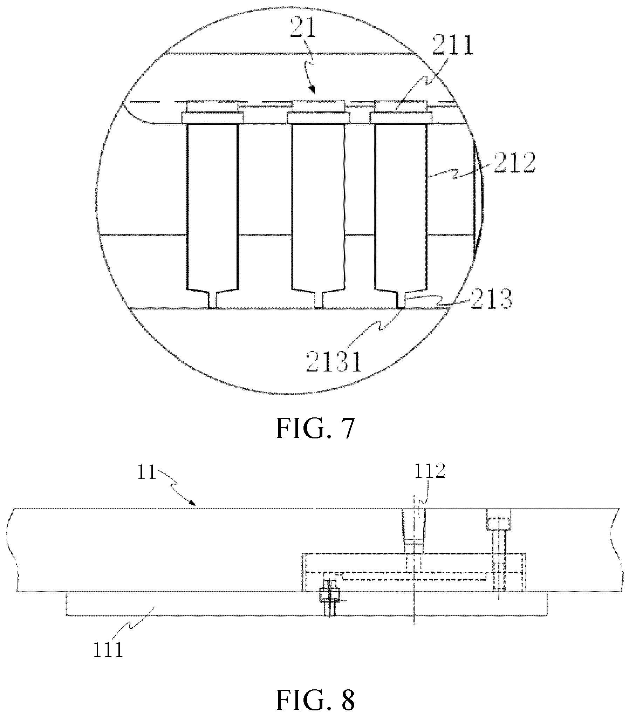

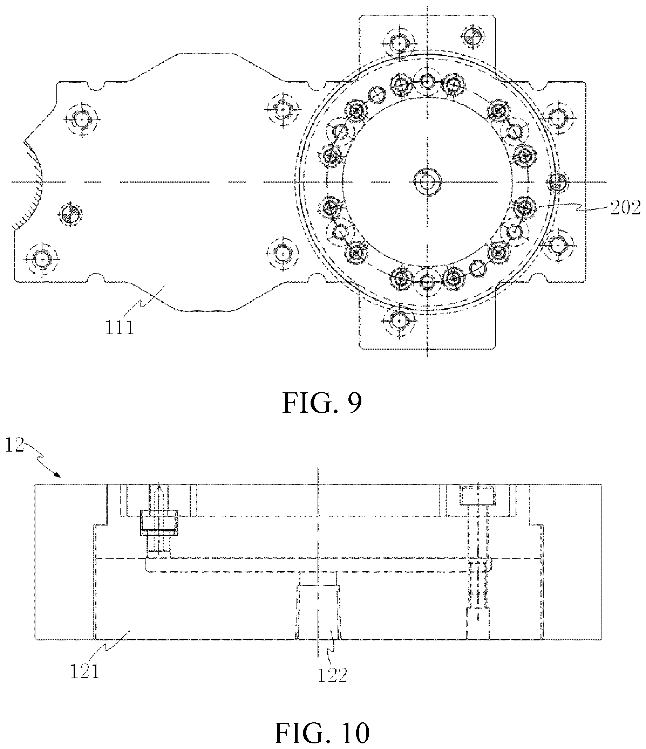

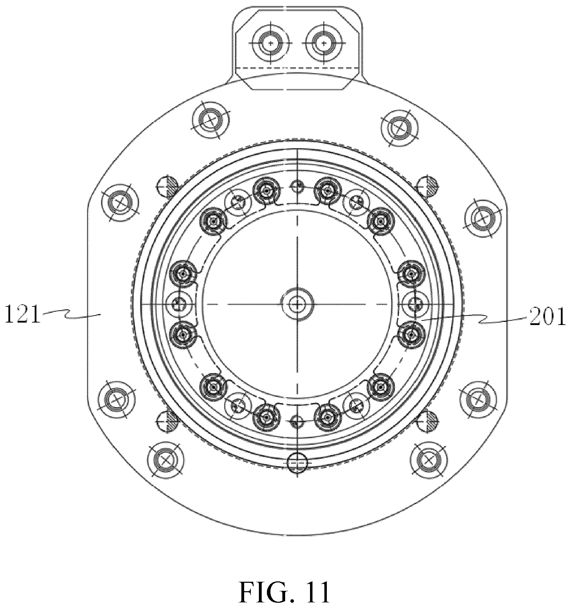

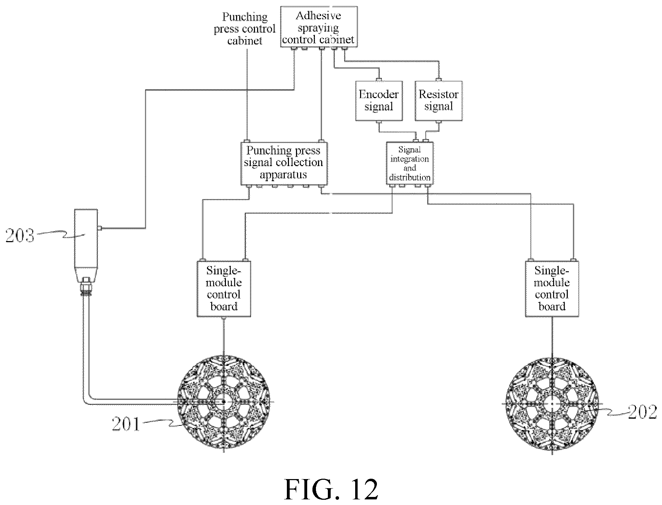

As shown in FIG. 1, and FIG. 6 to FIG. 12, a lamination method for an adhesively core includes steps:
blanking a continuous core sheet material 2 before a material-drop process;
determining whether a first adhesive spraying signal exists;
parsing, if the first adhesive spraying signal exists, the first adhesive spraying signal, to obtain, in the first adhesive spraying signal, a voltage value representing each adhesive spraying opening 21 of a piezoelectric adhesive spraying apparatus 20;
configuring the voltage value for the adhesive spraying opening 21, to form an electric field with a corresponding voltage value configured at a deformation portion of the adhesive spraying opening 21; and
controlling, according to the electric field, the deformation portion to deform, and pressing a binding agent in the adhesive spraying opening 21, to supply a first binding agent to a first surface of the core sheet material 2 facing a material-drop female mold 121 in a blanking station before material-drop, where the first binding agent is used to form a binding force for laminating cores on each other.

In the present invention, the first binding agent is supplied to the first surface of the core sheet material 2 in a piezoelectric adhesive spraying manner, to replace the conventional manner of comprehensively spraying the first binding agent. In an aspect, the problems of waste and increased costs caused by comprehensive spraying are solved. In another aspect, in this embodiment, glue entry is controlled by a voltage value, and a voltage value configured for each adhesive spraying opening 21 is controlled to control an adhesive spraying amount of a piezoelectric adhesive spraying apparatus 20. Different from the existing method of using air pressure spraying, a difference in adhesive dispensing amounts and reduction in precision are likely to be caused due to instability of the air pressure. In this embodiment, since the magnitude of the voltage value can be accurately controlled, a size of an adhesive point can be controlled and can be made very small within a specific range. A stable voltage can further ensure size consistency and shape regularity of adhesive points, thereby effectively avoiding a problem of adhesive overflow of a product.

The blanking station in the lamination method for an adhesively core includes a pre-material-dropping blanking station and a material-drop station. The pre-material-dropping blanking station includes blanking related structures such as a slot and a hole on the core sheet material 2. The material-drop station includes blanking the entire finished sheet on the core sheet material 2 and dropping the material to form a core.

In an embodiment, the first binding agent is supplied to the first surface of the core sheet material 2 facing the material-drop female mold 121 in one blanking station before material-drop.

Further, the first binding agent is supplied a plurality of times to the first surface of the core sheet material 2 facing the material-drop female mold 121 in the blanking station.

It may be understood that, in this embodiment, the piezoelectric adhesive spraying apparatus 20 may be controlled to spray adhesive at a predetermined position on the first surface of the core sheet material 2 once and for all. Alternatively, the piezoelectric adhesive spraying apparatus 20 may be controlled to spray adhesive at the same blanking station for a plurality of times to implement adhesive spraying at the predetermined position in combination.

Further, the blanking station is a material-drop station, that is, the first binding agent is supplied to the first surface of the core sheet material 2 facing the material-drop female mold 121 in a material-drop station before material-drop is performed.

Specifically, Compared with the manner of first spraying the first binding agent and then blanking the related structures such as the slot and the hole, in this embodiment, the manner of spraying the first binding agent at the material-drop station can effectively avoid the phenomenon that the first binding agent sprayed onto the core sheet material 2 overflows in the process of blanking the related structures such as the slot and the hole, avoid a case that the binding agent is bonded to the mold to cause pollution, and ensure the normal operation of the blanking process before the material-drop. In addition, unnecessary waste caused by premature curing and failure of the first binding agent during the blanking process can also be effectively avoided. As an environmental temperature requirement for prematurely spraying the binding agent is higher, manufacturing costs are increased.

Further, the method further includes: applying, by the piezoelectric adhesive spraying apparatus 20, the first binding agent after the core sheet material 2 is positioned by the material-drop female mold 121, where the positioning structure is used to improve the adhesive spraying accuracy thereof.

In an embodiment, the first binding agent is supplied to the first surface of the core sheet material 2 facing the material-drop female mold 121 in a plurality of blanking stations before material-drop. To be specific, in this embodiment, the piezoelectric adhesive spraying apparatus 20 may be controlled to spray adhesive at different blanking stations to implement adhesive spraying at the predetermined position in combination.

Further, the plurality of blanking stations include a material-drop station.

In an embodiment, in a same adhesive spraying process, at least two different voltage values act on deformation portions of a same type of adhesive spraying openings 21 at different locations, to form different adhesive spraying amounts in different regions on the first surface.

In another embodiment, in a same adhesive spraying process, a same voltage value acts on deformation portions of at least two types of adhesive spraying openings 21 at different locations, to form a same adhesive spraying amount in different regions on the first surface.

Through the foregoing arrangement, the size of the adhesive spraying opening 21 can be adjusted by using the effect of the voltage value to control the adhesive spraying amount of the adhesive spraying opening 21. The adhesive spraying openings 21 at different positions can operate independently, thereby improving the adhesive spraying efficiency and the adhesive spraying quality.

In this way, during adhesive spraying, the piezoelectric adhesive spraying apparatus 20 may not be in direct contact with the surface of the core sheet material 2, and the adhesive spraying amount of the adhesive spraying opening 21 can also be adapted to the size and contour structure design of the core, to ensure a uniform and proper amount of adhesive while avoiding a problem that the binding agent overflows during lamination of the core.

Several adhesive spraying openings 21 are formed on the piezoelectric adhesive spraying apparatus 20. The adhesive spraying opening 21 includes a piezoelectric element 211, an adhesive storage bin 212, and a piezoelectric nozzle 213. When a passing current of the piezoelectric element 211 is turned on, the piezoelectric element 211 contracts and deforms to press the adhesive storage bin 212. The adhesive storage bin 212 is deformed to press glue therein toward the piezoelectric nozzle 213, and then the glue is ejected to a corresponding position on a surface of the core sheet material 2 through the piezoelectric nozzle 213. The adhesive storage bin 212 is the deformation portion.

It may be understood that, by directly converting the current into the deformation of the piezoelectric adhesive spraying apparatus 20, the adhesive is extruded, so that faster response and more accurate adhesive spraying are achieved.

Specific steps include:
a drive current provided to the piezoelectric adhesive spraying apparatus 20 is turned on under control of the adhesive spraying signal, so that the piezoelectric element 211 of the piezoelectric adhesive spraying apparatus 20 contracts and compresses glue in the adhesive storage bin 212;
when the drive current provided to the piezoelectric adhesive spraying apparatus 20 is cut off, the piezoelectric element 211 is extended to push an adhesive drop out of the piezoelectric nozzle 213; and
when the drive current recovers, the piezoelectric element 211 contracts again to enter a preparation state in which the glue is ejected for the next time.

In this way, the glue can be accurately controlled, that is, ejection directions and shapes of adhesive points are accurately controlled, to form stable adhesive points. In addition, since the piezoelectric adhesive spraying apparatus 20 can be accurately controlled by using a curve of a current output, fast spraying of the first binding agent and the second binding agent in the mold can be achieved, and can be better adapted to a blanking rate and a material-drop rate of the mold.

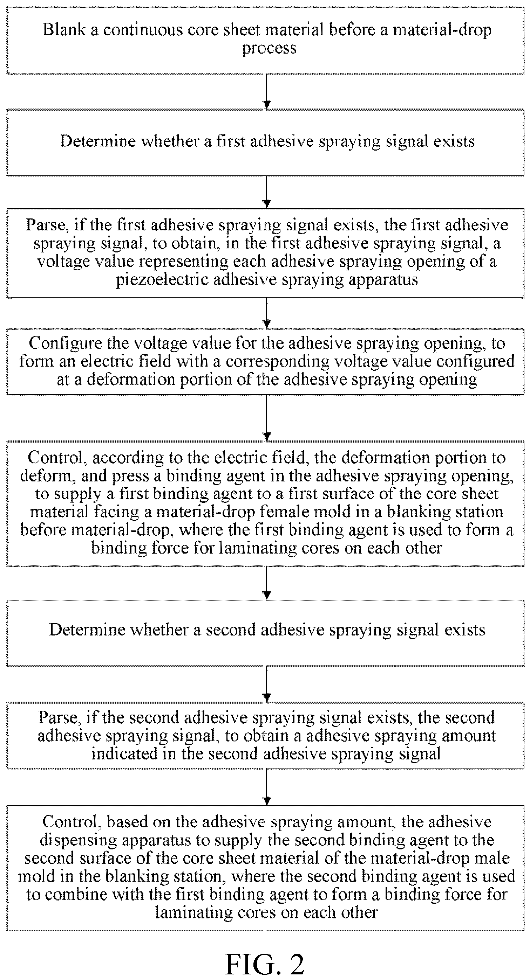

In an embodiment which is not according to the invention, as shown in combination with FIG. 2, and FIG. 6 to FIG. 11, the method further includes: controlling an adhesive dispensing apparatus to supply the second binding agent to a second surface of the core sheet material 2. The second surface of the core sheet material 2 faces the material-drop female mold 121.

Specifically, in this embodiment, the production method for laminated core adhesive includes steps:
determining whether a second adhesive spraying signal exists;
parsing, if the second adhesive spraying signal exists, the second adhesive spraying signal, to obtain an adhesive spraying amount indicated in the second adhesive spraying signal; and
controlling, based on the adhesive spraying amount, the adhesive dispensing apparatus to supply the second binding agent to the second surface of the core sheet material 2 of the material-drop male mold 111 in the blanking station, where the second binding agent is used to combine with the first binding agent to form a binding force for laminating cores on each other.

The adhesive dispensing apparatus includes an adhesive storage tank, an adhesive spraying disc, and a screw pump. The screw pump is mounted between the adhesive storage tank and the adhesive spraying disc. The screw pump controls an amount of adhesive entry from the adhesive storage tank to the adhesive spraying disc, so that the amount of adhesive entry is stable. The glue enters an adhesive entry channel in the adhesive spraying disc and is shunted to adhesive discharging heads. The adhesive discharging heads are arranged in a manner corresponding to an outline of the core sheet, so that the second binding agent is applied to the second surface of the core sheet material 2 through the adhesive discharging heads.

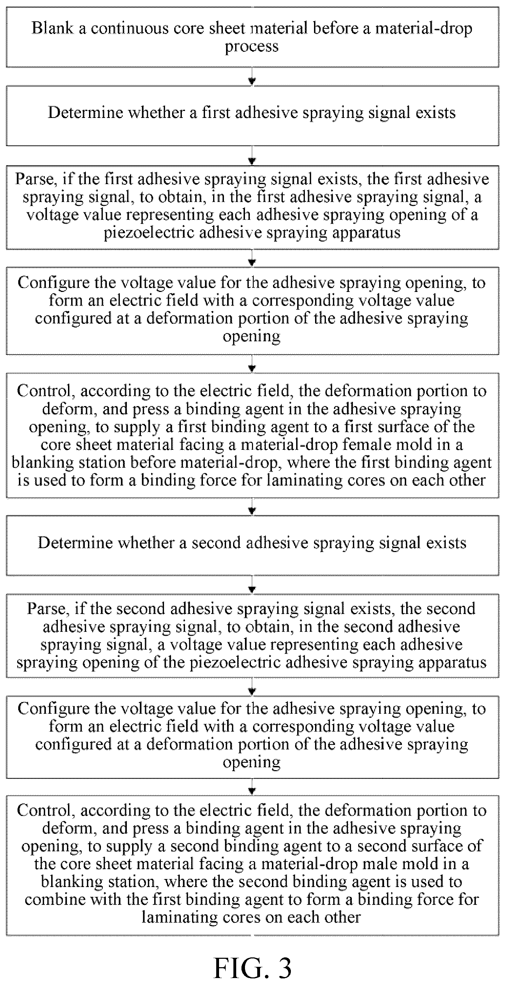

To improve an adhesive discharging response speed and adhesive spraying accuracy, in an embodiment according to the invention, as shown in combination with FIG. 3, and FIG. 6 to FIG. 11, the method further includes steps:
determining whether a second adhesive spraying signal exists;
parsing, if the second adhesive spraying signal exists, the second adhesive spraying signal, to obtain, in the second adhesive spraying signal, a voltage value representing each adhesive spraying opening 21 of the piezoelectric adhesive spraying apparatus 20;
configuring the voltage value for the adhesive spraying opening 21, to form an electric field with a corresponding voltage value configured at a deformation portion of the adhesive spraying opening 21; and
controlling, according to the electric field, the deformation portion to deform, and pressing a binding agent in the adhesive spraying opening 21, to supply a second binding agent to a second surface of the core sheet material 2 facing a material-drop male mold 111 in a blanking station, where the second binding agent is used to combine with the first binding agent to form a binding force for laminating cores on each other.

In this embodiment, the second binding agent is supplied to the second surface of the core sheet material 2 facing the material-drop male mold 111 in one blanking station.

Further, the second binding agent is supplied a plurality of times to the second surface of the core sheet material 2 facing the material-drop male mold 111 in the blanking station.

It may be understood that, in this embodiment, the piezoelectric adhesive spraying apparatus 20 may be controlled to spray adhesive at a predetermined position on the second surface of the core sheet material 2 once and for all. Alternatively, the piezoelectric adhesive spraying apparatus 20 may be controlled to spray adhesive at the same blanking station for a plurality of times to implement adhesive spraying at the predetermined position in combination.

Further, the blanking station is a material-drop station.

The second adhesive spraying signal is synchronized with the material-drop signal. To be specific, the material-drop process and the step of supplying the second binding agent by the piezoelectric adhesive spraying apparatus 20 are synchronously performed. When the material-drop mold male 111 and the material-drop female mold 121 are controlled to be closed, the piezoelectric adhesive spraying apparatus 20 is controlled to perform adhesive spraying.

Further, the method further includes: applying, by the piezoelectric adhesive spraying apparatus 20, the second binding agent before the material-drop male mold butts against the second surface or when the material-drop male mold 111 is butting against to the second surface. To be specific, in this embodiment, the second binding agent is sprayed while material-drop is performed. Because the piezoelectric adhesive spraying apparatus 20 has advantages such as high action accuracy, high response speed, and good stability, the adhesive spraying speed is matched with the blanking speed in this embodiment. In other words, adhesive spraying and material-drop in other regions of the core sheet material 2 can be quickly completed while the structure of the other regions is being blanked, so that the piezoelectric adhesive spraying apparatus 20 can better adapt to the overall blanking speed of the mold while ensuring the accuracy of the adhesive spraying, to improve the overall production rate of the production device 1.

Further, the method further includes: applying, by the piezoelectric adhesive spraying apparatus 20, the first binding agent and the second binding agent after the core sheet material 2 is positioned by the material-drop female mold 121. To be specific, the adhesive spraying on the first surface and the second surface of the core sheet material 2 is completed by arranging the core sheet material 2 to be positioned by the contour of the same material-drop female mold 121, to further ensure the accuracy of the adhesive spraying of the piezoelectric adhesive spraying apparatus 20, to further ensure that the adhesive point location of the first binding agent and the adhesive point location of the second binding agent accurately coincide when adjacent cores are laminated on each other.

In another embodiment, the second binding agent is supplied to the second surface of the core sheet material 2 facing the material-drop male mold 111 in a plurality of blanking stations. To be specific, in this embodiment, the piezoelectric adhesive spraying apparatus 20 may be controlled to spray adhesive at different blanking stations to implement adhesive spraying at the predetermined position on the second surface in combination.

Further, the plurality of blanking stations include a material-drop station.

In an embodiment, the first binding agent and the second binding agent are both applied to the surface of the core sheet material 2 in a dot shape, and adhesive points thereon coincide with each other when two adjacent cores are bonded and laminated on each other.

In another embodiment, the first binding agent is a mixed liquid in which the punching oil and the accelerator are mixed, and has a function of catalyzing the adhesive, the second binding agent is adhesive, and the adhesive is acrylic anaerobic adhesive; and after being mixed with each other, the first binding agent and the second binding agent may be cured in a normal-temperature environment, so that the plurality of cores are laminated and bonded to each other to form a laminated motor core.

Specifically, Both the first binding agent and the second binding agent are sprayed by including a plurality of adhesive spraying points. A specific quantity of the adhesive spraying points is determined based on a quantity of slot shapes of the core sheet, and locations of the adhesive points are properly arranged to ensure that an area of the adhesive spraying on the core sheet is sufficient while avoiding adhesive overflow during lamination. In addition, the piezoelectric adhesive spraying apparatus 20 is controlled by a current, glue can be sprayed corresponding to points, a quantity of spraying points of the first binding agent and a quantity of spraying points of the second binding agent are equal, and point positions are in a mutually corresponding relationship, so that the point position of the sprayed first binding agent and the point position of the sprayed second binding agent are completely in contact and thoroughly mixed during lamination, thereby achieving fast curing of the binding agents, avoiding waste of the binding agents, and reducing costs.

It should be understood that a quantity of adhesive spraying points of the second binding agent may alternatively be set to be greater than a quantity of adhesive spraying points of the first binding agent, so that excessive point positions of the second binding agent are not bonded to the first binding agent, but are directly in contact with the core sheet. Therefore, the second binding agent that is not bonded to the first binding agent is cured under a natural condition after the core sheet is dropped, laminated, and discharged, and the catalytic fast curing and the natural curing are combined under a room temperature condition, which effectively increases the cured connection strength between core sheet layers, improves the overall structural strength of the core, and provides reliable guarantee for the motor core in use.

To improve the adhesive spraying accuracy of the piezoelectric adhesive spraying apparatus 20, in an embodiment according to the invention, the method further includes steps:
obtaining a thickness of the core sheet material 2;
obtaining, according to the thickness, an amount of adhesive required when the cores are laminated on each other; and
determining, based on the amount of adhesive, an adhesive spraying amount of each adhesive spraying opening 21 of the piezoelectric adhesive spraying apparatus 20, to determine a voltage value corresponding to each adhesive spraying opening 21.

According to the invention, the thickness is measured by configuring an online material thickness measuring apparatus, to obtain the thickness data of the current core sheet material 2 more accurately.

Further, the step of obtaining, according to the thickness, an amount of adhesive required when the cores are laminated on each other includes:
performing matching between the thickness and a preset thickness threshold, where each preset thickness threshold matches a different preset adhesive amount; and
obtaining, if the thickness matches the preset thickness threshold, a preset adhesive amount corresponding to the preset thickness threshold as the adhesive amount.

By further accurately controlling the adhesive spraying amount of the piezoelectric adhesive spraying apparatus 20, a problem that the binding agent overflows during lamination of the core is avoided while ensuring that an even and proper amount of adhesive is sprayed, thereby improving the quality of the laminated core.

In another embodiment, the method further includes steps:
obtaining a size of a core preforming region on the core sheet material 2;
obtaining a distribution shape of the adhesive points on the core sheet material 2 according to the size; and
determining an adhesive spraying position of the piezoelectric adhesive spraying apparatus 20 based on the distribution shape, to configure a voltage value for an adhesive spraying opening 21 at a corresponding position.

Through the foregoing arrangement, an adhesive spraying amount of the adhesive spraying opening 21 may be adjusted according to a thickness dimension of the core sheet material 2, and a quantity of working adhesive spraying openings 21 may be adjusted according to different structural designs of the core. For example, if the thickness or the size of the core sheet material 2 increases, the aperture of the adhesive spraying opening 21 may be properly adjusted to increase and the adhesive discharging density thereof is increased, thereby increasing the amount of adhesive sprayed onto the surface of the core sheet material 2; and if the thickness or the size of the core sheet material 2 decreases, the aperture of the adhesive spraying opening 21 may be adjusted to decrease and the adhesive discharging density thereof is decreased, thereby decreasing the amount of adhesive sprayed onto the surface of the core sheet material 2.

In another embodiment, an adhesive outlet 2131 with a variable size is formed on the surface of the piezoelectric nozzle 213, and the size of the adhesive outlet 2131 is adjusted to control an adhesive spraying amount of the piezoelectric nozzle 213.

### Embodiment 2

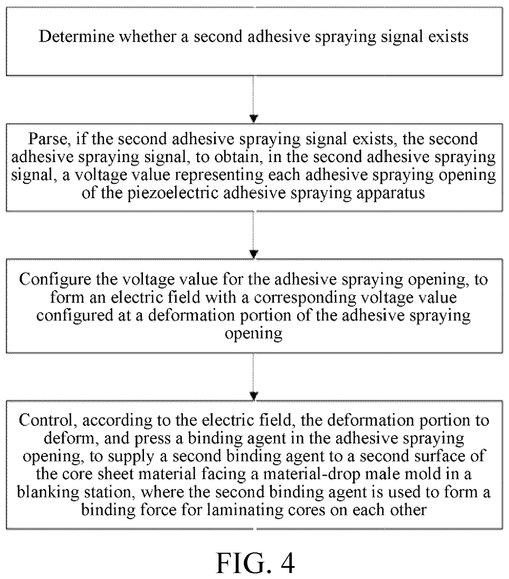

As shown in FIG. 4, and FIG. 6 to FIG. 12, a lamination method for an adhesively core includes steps:
determining whether a second adhesive spraying signal exists;
parsing, if the second adhesive spraying signal exists, the second adhesive spraying signal, to obtain, in the second adhesive spraying signal, a voltage value representing each adhesive spraying opening 21 of the piezoelectric adhesive spraying apparatus 20;
configuring the voltage value for the adhesive spraying opening 21, to form an electric field with a corresponding voltage value configured at a deformation portion of the adhesive spraying opening 21; and
controlling, according to the electric field, the deformation portion to deform, and pressing a binding agent in the adhesive spraying opening 21, to supply a second binding agent to a second surface of the core sheet material 2 facing a material-drop male mold 111 in a blanking station, where the second binding agent is used to form a binding force for laminating cores on each other.

In the present invention, glue entry is controlled by a voltage value, and a voltage value configured for each adhesive spraying opening 21 is controlled to control an adhesive spraying amount of a piezoelectric adhesive spraying apparatus 20. In addition, since the magnitude of the voltage value can be accurately controlled, a size of an adhesive point can be controlled and can be made very small within a specific range. A stable voltage can further ensure size consistency and shape regularity of adhesive points, thereby effectively avoiding a problem of adhesive overflow of a product.

The blanking station in the lamination method for an adhesively core includes a pre-material-dropping blanking station and a material-drop station. The pre-material-dropping blanking station includes blanking related structures such as a slot and a hole on the core sheet material 2. The material-drop station includes blanking the entire finished sheet on the core sheet material 2 and dropping the material to form a core.

In an embodiment, the second binding agent is supplied to the second surface of the core sheet material 2 facing the material-drop male mold 111 in one blanking station.

Further, the second binding agent is supplied a plurality of times to the second surface of the core sheet material 2 facing the material-drop male mold 111 in the blanking station.

It may be understood that, in this embodiment, the piezoelectric adhesive spraying apparatus 20 may be controlled to spray adhesive at a predetermined position on the second surface of the core sheet material 2 once and for all. Alternatively, the piezoelectric adhesive spraying apparatus 20 may be controlled to spray adhesive at the same blanking station for a plurality of times to implement adhesive spraying at the predetermined position in combination.

Further, the blanking station is a material-drop station.

The second adhesive spraying signal is synchronized with the material-drop signal. To be specific, the material-drop process and the step of supplying the second binding agent by the piezoelectric adhesive spraying apparatus 20 are synchronously performed. When the material-drop mold male 111 and the material-drop female mold 121 are controlled to be closed, the piezoelectric adhesive spraying apparatus 20 is controlled to perform adhesive spraying.

Further, the method further includes: applying, by the piezoelectric adhesive spraying apparatus 20, the second binding agent before the material-drop male mold butts against the second surface or when the material-drop male mold 111 is butting against to the second surface. To be specific, in this embodiment, the second binding agent is sprayed while material-drop is performed. Because the piezoelectric adhesive spraying apparatus 20 has advantages such as high action accuracy, high response speed, and good stability, the adhesive spraying speed is matched with the blanking speed in this embodiment. In other words, adhesive spraying and material-drop in other regions of the core sheet material 2 can be quickly completed while the structure of the other regions is being blanked, so that the piezoelectric adhesive spraying apparatus 20 can better adapt to the overall blanking speed of the mold while ensuring the accuracy of the adhesive spraying, to improve the overall production rate of the production device 1.

In addition, unnecessary waste caused by premature curing and failure of the second binding agent is effectively avoided in this embodiment. As an environmental temperature requirement for prematurely spraying the binding agent is higher, manufacturing costs are increased.

Further, the method further includes: applying, by the piezoelectric adhesive spraying apparatus 20, the first binding agent and the second binding agent after the core sheet material 2 is positioned by the material-drop female mold 121. To be specific, the adhesive spraying on the first surface and the second surface of the core sheet material 2 is completed by arranging the core sheet material 2 to be positioned by the contour of the same material-drop female mold 121, to further ensure the accuracy of the adhesive spraying of the piezoelectric adhesive spraying apparatus 20, to further ensure that the adhesive point location of the first binding agent and the adhesive point location of the second binding agent accurately coincide when adjacent cores are laminated on each other.

In another embodiment, the second binding agent is supplied to the second surface of the core sheet material 2 facing the material-drop male mold 111 in a plurality of blanking stations. To be specific, in this embodiment, the piezoelectric adhesive spraying apparatus 20 may be controlled to spray adhesive at different blanking stations to implement adhesive spraying at the predetermined position on the second surface in combination.

Further, the plurality of blanking stations include a material-drop station.

In an embodiment, in a same adhesive spraying process, at least two different voltage values act on deformation portions of a same type of adhesive spraying openings 21 at different locations, to form different adhesive spraying amounts in different regions on the first surface.

In another embodiment, in a same adhesive spraying process, a same voltage value acts on deformation portions of at least two types of adhesive spraying openings 21 at different locations, to form a same adhesive spraying amount in different regions on the first surface.

Through the foregoing arrangement, the size of the adhesive spraying opening 21 can be adjusted by using the effect of the voltage value to control the adhesive spraying amount of the adhesive spraying opening 21. The adhesive spraying openings 21 at different positions can operate independently, thereby improving the adhesive spraying efficiency and the adhesive spraying quality.

In this way, during adhesive spraying, the piezoelectric adhesive spraying apparatus 20 may not be in direct contact with the surface of the core sheet material 2, and the adhesive spraying amount of the adhesive spraying opening 21 can also be adapted to the size and contour structure design of the core, to ensure a uniform and proper amount of adhesive while avoiding a problem that the binding agent overflows during lamination of the core.

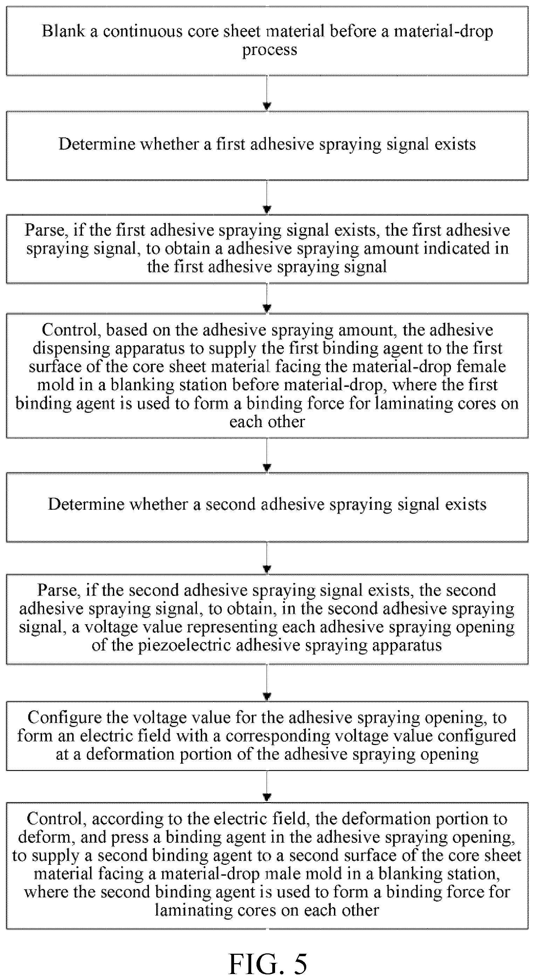

In an embodiment not according to the invention, as shown in combination with FIG. 5 and FIG. 6 to FIG. 11, the method further includes: controlling an adhesive dispensing apparatus to supply the first binding agent to a first surface of the core sheet material 2. The first surface of the core sheet material 2 is a surface of the core sheet material 2 facing the material-drop female mold 121.

Specifically, in this embodiment, the production method for laminated core adhesive includes at least steps:
blanking a continuous core sheet material 2 before a material-drop process;
determining whether a first adhesive spraying signal exists;
parsing, if the first adhesive spraying signal exists, the first adhesive spraying signal, to obtain an adhesive spraying amount indicated in the first adhesive spraying signal; and
controlling, based on the adhesive spraying amount, the adhesive dispensing apparatus to supply the first binding agent to the first surface of the core sheet material 2 facing the material-drop female mold 121 in a blanking station before material-drop, where the first binding agent is used to form a binding force for laminating cores on each other.

The adhesive dispensing apparatus includes an adhesive storage tank, an adhesive spraying disc, and a screw pump. The screw pump is mounted between the adhesive storage tank and the adhesive spraying disc. The screw pump controls an amount of adhesive entry from the adhesive storage tank to the adhesive spraying disc, so that the amount of adhesive entry is stable. The glue enters an adhesive entry channel in the adhesive spraying disc and is shunted to various adhesive discharging heads. The adhesive discharging heads are arranged in a manner corresponding to an outline of the core sheet, so that the first binding agent is applied to the first surface of the core sheet material 2 through the adhesive discharging heads.

In an embodiment, the first binding agent and the second binding agent are both applied to the surface of the core sheet material 2 in a dot shape, and adhesive points thereon coincide with each other when two adjacent cores are bonded and laminated on each other.

To improve the adhesive spraying accuracy of the piezoelectric adhesive spraying apparatus 20, according to the invention, the method further includes steps:
obtaining a thickness of the core sheet material 2;
obtaining, according to the thickness, an amount of adhesive required when the cores are laminated on each other; and
determining, based on the amount of adhesive, an adhesive spraying amount of each adhesive spraying opening 21 of the piezoelectric adhesive spraying apparatus 20, to determine a voltage value corresponding to each adhesive spraying opening 21.

According to the invention, the thickness is measured by configuring an online material thickness measuring apparatus, to obtain the thickness data of the current core sheet material 2 more accurately.

Further, the step of obtaining, according to the thickness, an amount of adhesive required when the cores are laminated on each other includes:
performing matching between the thickness and a preset thickness threshold, where each preset thickness threshold matches a different preset adhesive amount; and
obtaining, if the thickness matches the preset thickness threshold, a preset adhesive amount corresponding to the preset thickness threshold as the adhesive amount.

By further accurately controlling the adhesive spraying amount of the piezoelectric adhesive spraying apparatus 20, a problem that the binding agent overflows during lamination of the core is avoided while ensuring that an even and proper amount of adhesive is sprayed, thereby improving the quality of the laminated core.

In another embodiment, the method further includes steps:
obtaining a size of a core preforming region on the core sheet material 2;
obtaining a distribution shape of the adhesive points on the core sheet material 2 according to the size; and
determining an adhesive spraying position of the piezoelectric adhesive spraying apparatus 20 based on the distribution shape, to configure a voltage value for an adhesive spraying opening 21 at a corresponding position.

Through the foregoing arrangement, an adhesive spraying amount of the adhesive spraying opening 21 may be adjusted according to a thickness dimension of the core sheet material 2, and a quantity of working adhesive spraying openings 21 may be adjusted according to different structural designs of the core. For example, if the thickness or the size of the core sheet material 2 increases, the aperture of the adhesive spraying opening 21 may be properly adjusted to increase and the adhesive discharging density thereof is increased, thereby increasing the amount of adhesive sprayed onto the surface of the core sheet material 2; and if the thickness or the size of the core sheet material 2 decreases, the aperture of the adhesive spraying opening 21 may be adjusted to decrease and the adhesive discharging density thereof is decreased, thereby decreasing the amount of adhesive sprayed onto the surface of the core sheet material 2.

### Embodiment 3

An adhesively laminated core is formed by laminating and bonding a plurality of core sheets. The core is manufactured using the lamination method for an adhesively laminated core according to Embodiment 1 or Embodiment 2.

The first binding agent is applied to the first surface of the core sheet material 2 (that is, the surface of the core sheet material 2 facing the material-drop female mold 121) by using the piezoelectric adhesive spraying apparatus 20; the second binding agent is applied to the second surface of the core sheet material 2 (that is, the surface of the core sheet material 2 facing the material-drop male mold 111) by using the piezoelectric adhesive spraying apparatus 20; and through contact between the first binding agent and the second binding agent, the binding agents are quickly cured to form rotor cores and stator cores. After reaching a preset quantity of pieces, rotor cores and stator cores are transported out of the production device 1 by a transportation apparatus.

According to the foregoing production method, the rotor cores and the stator cores are manufactured. This manner, in an aspect, greatly improves production efficiency of the laminated core, and in another aspect, avoids defects of the laminated core caused by other connection manners, and more reasonable and reliable connection strength is obtained by using a proper layout of the adhesive spraying points. Therefore, the performance of the laminated core can be optimized, and the manufactured laminated core is stronger and efficient. In addition, fast adhesive spraying and accurate control of the piezoelectric adhesive spraying apparatus 20 also represent an intelligent manufacturing advantage.

### Embodiment 4

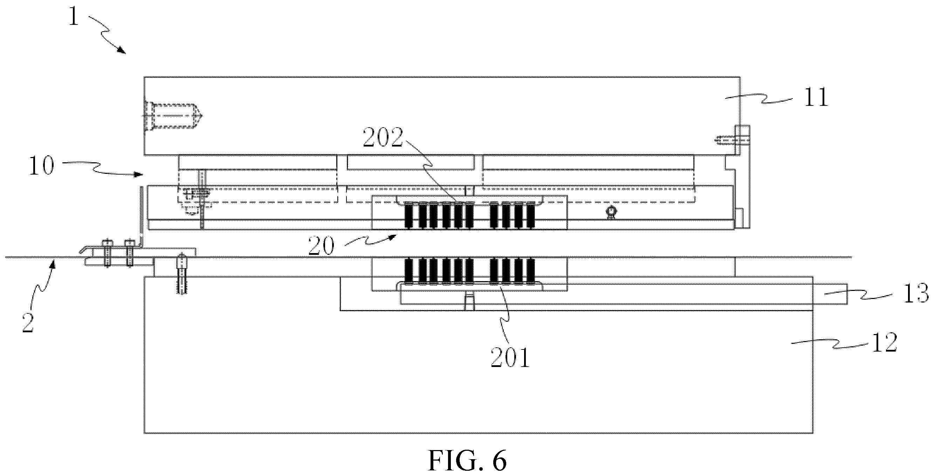

As shown in combination with FIG. 6 to FIG. 12, a production device for an adhesively laminated core is configured to produce the adhesively laminated core according to Embodiment 3 and includes:
a blanking unit 10, including an upper mold assembly 11 and a lower mold assembly 12, where the upper mold assembly 11 and the lower mold assembly 12 act collaboratively to sequentially blank and drop cores with a predetermined shape from a stepwise transported core sheet material 2;
a piezoelectric adhesive spraying apparatus 20, mounted on the blanking unit 10, and configured to spray a first binding agent onto a first surface of the core sheet material 2 and spray a second binding agent onto a second surface of the core sheet material 2; and
a control unit, configured to perform the lamination method for an adhesively core according to Embodiment 1 or Embodiment 2.

In some preferred embodiments, after the control unit controls the blanking unit 10 to perform a blanking process before material-drop, which is preferably located at a material-drop station where material-drop is not performed, the piezoelectric adhesive spraying apparatus 20 is controlled to supply the first binding agent to the first surface of the core sheet material 2; and when the control unit controls the blanking unit 10 to perform a material-drop process, the piezoelectric adhesive spraying apparatus 20 is controlled to supply the second binding agent to the second surface of the core sheet material 2.

Further, the blanking unit 10 includes an upper mold assembly 11 and a lower mold assembly 12, a plurality of punches and a mold are arranged on each of the upper mold assembly 11 and the lower mold assembly 12, the upper mold assembly 11 and the lower mold assembly 12 act collaboratively to sequentially blank core sheets with a predetermined shape from a stepwise transported core sheet material 2.

A guide member is arranged on the lower mold assembly 12, and the guide member guides the transportation of the core sheet material 2 in an intermittent transportation direction and limits the upward movement of the core sheet material 2; a guide pin is arranged on the upper mold assembly 11, and the guide pin is configured to be inserted through a guide hole formed in the core sheet material 2 in each transportation position to perform positioning of the core sheet material 2; and positioning is first performed before performing blanking and adhesive spraying, and further, structural contours of the guide members and the guide pins are the same at positions, to ensure quick positioning while performing processes.

Further, the piezoelectric adhesive spraying apparatus 20 includes a first piezoelectric adhesive spraying structure 201 and a second piezoelectric adhesive spraying structure 202, where
the first piezoelectric adhesive spraying structure 201 is mounted on the material-drop female mold 121, and is configured to supply the first binding agent to the first surface of the core sheet material 2; and
the second piezoelectric adhesive spraying structure 202 is mounted on the material-drop male mold 111, and is configured to supply the second binding agent to the second surface of the core sheet material 2,
where several adhesive spraying openings 21 are distributed on each of the first piezoelectric adhesive spraying structure 201 and the second piezoelectric adhesive spraying structure 202.

Specifically, a first adhesive inlet 122 is opened corresponding to a mounting position of the lower mold assembly 12 and the material-drop female mold 121, and the first adhesive inlet 122 is in communication with each of the first piezoelectric adhesive spraying structure 201 and an adhesive sleeve 203; a second adhesive inlet 112 is opened corresponding to a mounting position of the upper mold assembly 11 and the material-drop male mold 111, and the second adhesive inlet 112 is in communication with each of the second piezoelectric adhesive spraying structure 202 and the adhesive sleeve 203; and through the foregoing arrangement, binding agents in the adhesive sleeve 203 are smoothly introduced into each adhesive spraying opening 21.

Further, a transducer is arranged on the piezoelectric adhesive spraying apparatus 20, and the transducer is controlled by a punching press control signal, to control the spraying of the glue.

In this embodiment, by setting the spraying station at the material-drop station, in an aspect, problems that the binding agents overflow and the binding agents are bonded to the mold to cause pollution in the process of first spraying the binding agents and then performing the contour blanking process are effectively avoided, ensuring normal operations of the contour blanking process; and unnecessary waste caused by premature curing and failure of the first binding agent during the blanking process after the first binding agent is first sprayed can also be effectively avoided. As an environmental temperature requirement for prematurely spraying the binding agent is higher, manufacturing costs are increased.

In another aspect, while the piezoelectric adhesive spraying method is used to resolve the problems of waste and increased costs that occur in comprehensive spraying, glue entry is controlled by a voltage value, and a voltage value configured for each adhesive spraying opening 21 is controlled to control an adhesive spraying amount of a piezoelectric adhesive spraying apparatus 20. In addition, since the magnitude of the voltage value can be accurately controlled, a size of an adhesive point can be controlled and can be made very small within a specific range. A stable voltage can further ensure size consistency and shape regularity of adhesive points, thereby effectively avoiding a problem of adhesive overflow of a product. In addition, the high adhesive discharging response speed of the piezoelectric adhesive spraying apparatus 20 can be well adapted to the blanking rate of the blanking unit 10, thereby improving production and manufacturing efficiency, and the high adhesive spraying accuracy effectively increases the cured connection strength between the cores that are laminated on each other, improves the overall structural strength of the laminated cores, and provides reliable guarantee for the motor core in use.

Further, the control unit includes:
an adhesive spraying control unit, connected to the piezoelectric adhesive spraying apparatus 20; and
a punching control unit, electrically connected to each of the blanking unit 10 and the adhesive spraying control unit,
where the adhesive spraying control unit correspondingly converts an adhesive spraying control instruction into a first adhesive spraying signal and a second adhesive spraying signal;
the first piezoelectric adhesive spraying structure 201 receives the first adhesive spraying signal to perform adhesive spraying on the first surface of the core sheet material 2; and
the second piezoelectric adhesive spraying structure 202 receives the second adhesive spraying signal to perform adhesive spraying on the second surface of the core sheet material 2.

Further, the punching control unit further includes a punching press signal collection apparatus, which is electrically connected to each of the adhesive spraying control unit and the piezoelectric adhesive spraying apparatus 20, and is configured to collect a signal of the piezoelectric adhesive spraying apparatus 20 and feed back the signal to a punching press control cabinet and an adhesive spraying control cabinet.

Specifically, the control process includes: After adhesive spraying signals are generated by using an encoder signal and a resistor signal, one adhesive spraying signal is fed back to the adhesive spraying control cabinet, and the other adhesive spraying signal is correspondingly transported to the two single-module control boards 13 of the piezoelectric adhesive spraying apparatus 20 by using a signal integration and distribution module. The two single-module control boards 13 respectively control the first piezoelectric adhesive spraying structure 201 and the second piezoelectric adhesive spraying structure 202 to spray adhesive onto the surface of the core sheet material 2 and then feed back adhesive spraying data to the punching press signal collection apparatus. The punching press signal collection apparatus feeds back the collected adhesive spraying data to the adhesive spraying control cabinet. The adhesive spraying control cabinet controls, in combination the adhesive spraying signals collected by the adhesive spraying control cabinet, the adhesive sleeve 203 to supply adhesive to the first piezoelectric adhesive spraying structure 201 and the second piezoelectric adhesive spraying structure 202.

### Embodiment 5

As shown in combination with FIG. 13 to FIG. 25, a production device for an adhesively laminated core is configured to produce the adhesively laminated core according to Embodiment 3 and includes:
a blanking unit 10, including an upper mold assembly 11 and a lower mold assembly 12, where the upper mold assembly 11 and the lower mold assembly 12 act collaboratively to sequentially blank and drop core sheets with a predetermined shape from a stepwise transported core sheet material 2, where in stepwise feeding, a roller feeder is arranged at each of two ends of the production device 1, and the core sheet material 2 is transported in a manner of pushing-in-the-front and pulling-at-the-back. In addition, a plurality of punches and a mold are arranged on each of the upper mold assembly 11 and the lower mold assembly 12, so that a core sheet with a predetermined shape can be blanked.
a piezoelectric adhesive spraying apparatus 20, mounted on the blanking unit 10, and configured to spray a first binding agent onto a first surface of the core sheet material 2 and spray a second binding agent onto a second surface of the core sheet material 2; and
a control unit, configured to perform the lamination method for an adhesively core according to Embodiment 1 or Embodiment 2.

Further, the method further includes: an adhesive spraying apparatus 3, connected to the piezoelectric adhesive spraying apparatus 20, where the adhesive spraying apparatus 3 is arranged corresponding to a surface that is of the core sheet material 2 and that is used for a core sheet forming portion, to spray the first binding agent and/or the second binding agent supplied by the piezoelectric adhesive spraying apparatus 20 to a surface of the core sheet material 2 at a corresponding position.

In this embodiment, the piezoelectric adhesive spraying apparatus 20 is configured to accurately control an amount of adhesive supplied to the adhesive spraying apparatus 3, and the adhesive spraying apparatus 3 is configured to accurately control a spraying direction and a spraying shape of an adhesive point.

Specifically, in some embodiments, the adhesive spraying apparatus 3 is in communication with a first binding agent adhesive spraying opening of the piezoelectric adhesive spraying apparatus 20, and is configured to spray the first binding agent onto the first surface of the core sheet material 2. In some other embodiments, the adhesive spraying apparatus 3 is in communication with a second binding agent adhesive spraying opening of the piezoelectric adhesive spraying apparatus 20, and is configured to spray the second binding agent onto the second surface of the core sheet material 2. In some preferred embodiments, the adhesive spraying apparatus 3 includes a first adhesive spraying apparatus and a second adhesive spraying apparatus. The first adhesive spraying apparatus is in communication with the first binding agent adhesive spraying opening of the piezoelectric adhesive spraying apparatus 20, and the second adhesive spraying apparatus is in communication with the second binding agent adhesive spraying opening of the piezoelectric adhesive spraying apparatus 20, to spray the first binding agent and the second binding agent onto the first surface and the second surface of the core sheet material 2 respectively.

The adhesive spraying apparatus 3 is arranged corresponding to a surface of the core sheet material 2 that is used for a core sheet forming portion. The adhesive spraying apparatus 3 includes an adhesive spraying plate 30, a first mold plate 31, and a second mold plate 32. The adhesive spraying plate 30 has a structure of a loop, generally a ring. The first mold plate 31 is arranged between the adhesive spraying plate 30 and the second mold plate 32. A mandrel pressing plate 33 is placed in an inner hole of the adhesive spraying plate 30. A first boss 304 is formed on an inner wall of the adhesive spraying plate 30. A second boss 331 is formed on an outer wall of the mandrel pressing plate 33. The second boss 331 is pressed on the first boss 304. A screw of each of a plurality of bolts extends through the mandrel pressing plate 33 and the first mold plate 31 and then are threadedly connected to a threaded hole of the second mold plate 32. Nine bolts may be set here. An insertion ring 34 is fixed to the second mold plate 32. A screw of each of a plurality of bolts extends through the insertion ring 34 and are threadedly connected to a threaded hole of the second mold plate 32. At least ten bolts may be set here. The first mold plate 31 and the adhesive spraying plate 30 are placed in an inner cavity of the insertion ring 34. A protrusion 341 is formed on an inner wall of the insertion ring 34, a step 303 is formed on the adhesive spraying plate 30, and the protrusion 341 is limited on the step 303. In this way, the adhesive spraying plate 30, the first mold plate 31, and the second mold plate 32 are connected to each other through arrangement of the mandrel pressing plate 33 and the insertion ring 34, so that the structure is compact and reliable. The adhesive spraying plate 30, the first mold plate 31, and the second mold plate 32 are all metal plates. The adhesive spraying plate 30, the first mold plate 31, and the second mold plate 32 are sealed from each other by using a rubber seal ring 35 to prevent adhesive leaking.

A first adhesive spraying region 36 and a second adhesive spraying region 37 located at a periphery of the first adhesive spraying region 36 are formed on an adhesive spraying surface of the adhesive spraying plate 30. A plurality of first adhesive spraying openings 301 spaced apart from each other are formed in the first adhesive spraying region 36. A plurality of second adhesive spraying openings 302 spaced apart from each other are formed in the second adhesive spraying region 37. Upper adhesive discharging ends of the first adhesive spraying openings 301 and the second adhesive spraying openings 302 are in the form of a cone cavity 305 with a diameter of a lower-end opening being greater than a diameter of an upper-end opening. A straight channel 306 further communicates with the upper-end opening of the cone cavity 305. A diameter of the straight channel 306 is consistent with the diameter of the upper-end opening of the cone cavity 305. In this way, the diameter dimension of the adhesive point during the adhesive spraying of the first adhesive spraying opening 301 and the second adhesive spraying opening 302 is limited, to avoid an excessively large diameter of the adhesive point.

In an embodiment, a plurality of first shunting channels 312 respectively communicating with the first adhesive spraying openings 301, a first adhesive entry channel 313 communicating with each first shunting channel 312, and a plurality of transition channels 311 respectively correspondingly communicating with the second adhesive spraying openings 302 are formed on a front face of the first mold plate 31. A plurality of second shunting channels respectively 321 communicating with the transition channels 311, and a second adhesive entry channel 322 communicating with each second shunting channel 321 are formed on a front face of the second mold plate 32. After the adhesive is inputted into the third adhesive entry channel 323, the adhesive enters the first adhesive spraying opening 301 through the first adhesive entry channel 313 and the first shunting channel 312, and then is ejected through the straight channel 306 of the first adhesive spraying opening 301; and after the adhesive is inputted into the second adhesive entry channel 322, the adhesive enters the second adhesive spraying opening 302 after passing through the second shunting channel 321 and the transition channel 311, and then is ejected through the straight channel 306 of the second adhesive spraying opening 302. Therefore, after the surface of the core sheet material 2 that is used for the core sheet forming portion is in contact with the upper surface of the adhesive spraying plate 30, the adhesive ejected by the first adhesive spraying opening 301 and the second adhesive spraying opening 302 directly coats the surface of the core sheet material 2 that is used for the core sheet forming portion. The first adhesive entry channel 313 is penetratingly arranged on the first mold plate 31, and the second adhesive entry channel 322 is penetratingly arranged on the second mold plate 32.

In this embodiment, the piezoelectric adhesive spraying apparatus 20 may be provided with a plurality of adhesive spraying openings 21 to provide the same type of binding agent, and the second adhesive entry channel 322 and the third adhesive entry channel 323 respectively communicate with different adhesive spraying openings of the piezoelectric adhesive spraying apparatus 20 to spray the first binding agent or the second binding agent onto the core sheet material 2. In this way, each adhesive spraying opening 21 works independently. The adhesive spraying amount of the adhesive spraying opening 21 can be regulated by using the effect of the voltage value, and in combination with the shunting guidance of the first mold plate 31 and the second mold plate 32, the same adhesive spraying amount or different adhesive spraying amounts in different regions of the same surface of the core sheet material 2 are realized, to be adapted to the size and contour structure design of the core sheet, to ensure a uniform and proper amount of adhesive while avoiding a problem that the binding agent overflows during lamination of the core.

In another implementation, an avoidance hole or an avoidance notch may be provided on the second mold plate 32, to expose the lower-end opening of the first adhesive entry channel 313, so that the first adhesive entry channel 313 may be directly docked with an adhesive entry pipe, that is, directly docked with the adhesive spraying opening 21 of the piezoelectric adhesive spraying apparatus 20.

In some embodiments, a first shunting cavity 314 is formed on the front face of the first mold plate 31, the first shunting cavity 314 is in communication with the first adhesive entry channel 313, and each first shunting channel 312 is in communication with the first shunting cavity 314. The first shunting cavity 314 is configured to collect the adhesive inputted through the first adhesive entry channel 313 and the third adhesive entry channel 323. After the first shunting cavity 314 is filled with the adhesive, the adhesive enters each first shunting channel 312, so that the first adhesive spraying opening 301 has a large pressure to eject the adhesive. This arrangement cooperates with the precise control of the amount of the adhesive by the piezoelectric adhesive spraying apparatus 20, so that and quantitative and precise adhesive spraying can be achieved at each part.

In some embodiments, a second shunting cavity 325 is formed on the front face of the second mold plate 32, the second shunting cavity 325 is in communication with the second adhesive entry channel 322, and each second shunting channel 321 is in communication with the second shunting cavity 325. The second shunting cavity 325 is configured to collect the adhesive inputted through the second adhesive entry channel 322. After the second shunting cavity 325 is filled with the adhesive, the adhesive enters each second shunting channel 321, so that the first adhesive spraying opening 301 has a large pressure to eject the adhesive. This arrangement cooperates with the precise control of the amount of the adhesive by the piezoelectric adhesive spraying apparatus 20, so that and quantitative and precise adhesive spraying can be achieved at each part.

In an embodiment, Both the first adhesive spraying region 36 and the second adhesive spraying region 37 are in a loop-shaped structure, generally ring-shaped, a plurality of first adhesive spraying openings 301 are evenly distributed at equal intervals, and a plurality of second adhesive spraying openings 302 are evenly distributed at equal intervals. Through the structural arrangement, adhesive points coating the surface of the core sheet material 2 that is used for the core sheet forming portion are evenly distributed, to achieve stable and reliable fixed connection between the core sheets.

In an embodiment, a plurality of communication slots 324 arranged in an annular array are formed on each of the front face of the first mold plate 31 and the front face of the second mold plate 32. Through the arrangement, the plurality of first shunting channels 312 communicate with each other through the communication slots 324 on the first mold plate 31, and the plurality of second shunting channels 321 communicate with each other through the communication slots 324 on the second mold plate 32, so that when an amount of adhesive in a particular shunting channel is excessive, the adhesive may be shunted to other shunting channels on a corresponding mold plate through communication slots 324.

Specifically, each communication slot 324 on the first mold plate 31 is located between the plurality of first shunting channels 312, to cause the plurality of first shunting channels 312 to communicate with each other through the communication slots 324. A position of each communication slot 324 on the first mold plate 31 is respectively arranged corresponding to a position of the first adhesive spraying region 36 of the loop-shaped structure. The first adhesive spraying opening 301 communicates with the first shunting channel 312 through the communication slot 324 on the first mold plate 31. A third adhesive entry channel 323 communicating with the first adhesive entry channel 313 is formed on the second mold plate 32. The second adhesive entry channel 322 and the third adhesive entry channel 323 are penetratingly arranged on the second mold plate 32. When adhesive is inputted into the third adhesive entry channel 323, the adhesive enters the first adhesive spraying opening 301 through the first adhesive entry channel 313, the first shunting channel 312, the first shunting cavity 314, and the communication slot 324, and is finally ejected through the straight channel 306 of the first adhesive spraying opening 301 and directly coats the surface of the core sheet material 2 that is used for the core sheet forming portion.

Specifically, each communication slot 324 on the second mold plate 32 is located between the plurality of second shunting channels 321, to cause the plurality of second shunting channels 321 to communicate with each other through the communication slots 324. A position of each communication slot 324 on the second mold plate 32 is respectively arranged corresponding to a position of the second adhesive spraying region 37 of the loop-shaped structure. The second adhesive spraying opening 302 communicates with the second shunting channel 321 through the transition channel 311 and the communication slot 324 on the second mold plate 32. When adhesive is inputted into the second adhesive entry channel 322, the adhesive enters the second adhesive spraying opening 302 through the second shunting channel 321, the second shunting cavity 325, the communication slot 324, and the transition channel 311, and is finally ejected through the straight channel 306 of the second adhesive spraying opening 302 and directly coats the surface of the core sheet material 2 that is used for the core sheet forming portion.

In the foregoing, a front face of the first mold plate 31 is a side facing the adhesive spraying plate 30, and a front face of the second mold plate 32 is a side facing the first mold plate 31.

In an embodiment, the production device further includes a positioning structure for guiding and limiting the core sheet material 2 during the stepwise transportation. Two positioning structures may be set, and the two positioning structures are respectively arranged on a left side and a right side of the lower mold assembly 12. The positioning structure includes a side guide plate 7 and a magnet 72. A positioning slot 71 is formed on the side guide plate 7. The magnet 72 is embedded in an upper inner wall of the positioning slot 71. A side edge of the core sheet material 2 is located in the positioning slot 71. The magnet 72 separates the core sheet material 2 from an upper surface of the lower mold assembly 12 by a magnetic force of the magnet, to ensure that the core sheet material 2 is attracted by the magnet 72 after separation, to prevent the core sheet material 2 from shaking, further prevent the adhesive points on the core sheet material 2 from shaking, and avoid changes in the shape of the adhesive points stuck to the core sheet material 2. Therefore, material lifting and feeding are smoother in the arrangement of the side guide plate 7 and the magnet 72. Because in stepwise feeding, a roller feeder is arranged at each of two ends of the production device, and the core sheet material 2 is transported in a manner of pushing-in-the-front and pulling-at-the-back, the core sheet material 2 is attracted by the magnet 72, and is lifted. Alternatively, the core sheet material 2 may be transported stepwise in a case of attraction. The core sheet material 2 is made of a silicon steel sheet, and therefore may be attracted by the magnet 72.

In this embodiment, the production device further includes a lifting apparatus 4; the lifting apparatus 4 includes an extraction plate 42 and an extraction plate cushion block 41 fixed to the second mold plate 32, a plurality of matching tooth blocks 411 are formed on each of a bottom surface of the extraction plate cushion block 41 and a top surface of the extraction plate 42 through a plurality of matching slots 412 that are arranged at equal intervals from each other, and the matching tooth blocks 411 are correspondingly inserted into the matching slots 412; a side wall of the matching slot 412 on the extraction plate cushion block 41 and a side wall of the matching slot 412 on the extraction plate 42 are attached to each other, and both of the two side walls that are attached to each other are slopes 413 with consistent oblique angles, and an extension segment of the extraction plate 42 penetrates a channel and then is connected to an air cylinder 43 located on the lower mold assembly 12. After one laminated motor core or core sheet is blanked, when a second laminated motor core or core sheet starts to be blanked, the air cylinder 43 extracts the extraction plate 42, so that the matching tooth block 411 is configured into the matching slot 412, thereby forcing the adhesive spraying plate 30 to be lower than the top surface of the lower mold assembly 12 by 1 mm to 2 mm. In this way, even if there is residual adhesive on the adhesive spraying plate 30 previously, the adhesive is not stuck to the core sheet material 2, so that the core sheet material 2 in the transportation process is kept clean. For example, sticking of the remaining adhesive to the core sheet material 2 easily leads to a case that the verticality tolerance, the planarity tolerance, the roundness tolerance, and other form and position tolerances of the bonded core cannot meet requirements, so that the core is discarded. A plurality of bolts respectively extend through the insertion ring 34 and the second mold plate 32 sequentially and then are threadedly connected to the threaded holes of the extraction plate cushion block 41. At least five bolts may be arranged here.

A cavity is provided on the extraction plate cushion block 41, and the cavity is configured to accommodate a connector for docking the second adhesive entry channel 322 and the third adhesive entry channel 323.

In this embodiment, a guide assembly 5 includes a guide post 52 fixed to the extraction plate cushion block 41 and a guide sleeve 51 mounted on the lower mold assembly 12, and the guide post 52 is inserted into the guide sleeve 51. When the extraction plate cushion block 41 moves up and down, the guide post 52 moves telescopically in the guide sleeve 51, so that the lifting movement of the adhesive spraying apparatus 3 is stable and reliable, and the movement in the up and down direction is always maintained. A ball guide sleeve may be used as the guide sleeve 51, so that the movement of the guide post 52 in the guide sleeve 51 is smoother.

In this embodiment, a reset assembly 6 includes a sleeve 61 mounted on the lower mold assembly 12, and a spring 62 and a pillar 63 that are placed in the sleeve 61, the pillar 63 is connected to the extraction plate cushion block 41, and two ends of the spring 62 are respectively connected to the sleeve 61 and the pillar 63. After the air cylinder 43 extracts the extraction plate 42 to cause the adhesive spraying apparatus 3 to rise, the extraction plate 42 is extracted again to cause the matching tooth block 411 to correspond to the matching slot 412. In this case, the adhesive spraying apparatus 3 is driven to move downward under the action of the spring 62, and the matching tooth block 411 correspondingly sinks into the matching slot 412. This structural arrangement achieves a function of resetting and downward moving of the adhesive spraying apparatus 3.

In this embodiment, the core production is performed based on the foregoing production device for a laminated motor core. Specific method steps include:
The core sheet material 2 is transported in a material-drop direction between an upper mold assembly 11 and a lower mold assembly 12 of the production device in a continuous stepwise manner, so that a core sheet preforming region is attached to an adhesive spraying apparatus 3 located before a material-drop station in the production device, and the piezoelectric adhesive spraying apparatus 20 is controlled to supply adhesive to the adhesive spraying apparatus 3 after an adhesive spraying signal is obtained, that is, the first piezoelectric adhesive spraying structure 201 is controlled to supply adhesive to the first adhesive spraying apparatus to coat a first surface of the core sheet material 2 with a first binding agent, and the second piezoelectric adhesive spraying structure 202 is controlled to supply adhesive to the second adhesive spraying apparatus to coat a second surface of the core sheet material 2 with a second binding agent;
the adhesive is transported to a first adhesive spraying opening 301 and a second adhesive spraying opening 302 of the adhesive spraying apparatus 3 through the piezoelectric adhesive spraying apparatus 20, and the adhesive ejected by the first adhesive spraying opening 301 and the second adhesive spraying opening 302 is bonded to a surface of the core sheet preforming region, and adhesive points are evenly distributed on the surface of the core sheet preforming region; and
after the core sheet preforming region of the core sheet material 2 is blanked to form the core sheet, and the core sheet drops into a material-drop channel, the core sheet comes into contact with and is cured and bonded to a top surface of a core sheet lamination stack inside the material-drop channel through the first binding agent and the second binding agent, to form a laminated core. In this embodiment, the first binding agent is a mixed liquid in which the punching oil and the accelerator are mixed, and has a function of catalyzing the adhesive, the second binding agent is adhesive, and the adhesive is acrylic anaerobic adhesive. During curing and bonding, the bonding is completed within a time ranging from 10s to 3 min in a temperature environment of 15°C to 35°C. In addition, the formed core sheet is compressed by a forming mold of the upper mold assembly 11, and the core sheet lamination stack is subjected to a back pressure of a hydraulic cylinder and a tightening force of a locking ring, so that the formed core sheet is closely bonded to the top surface of the core sheet lamination stack. A temperature range of 15°C to 35°C is generally a normal temperature range, and is preferably from 20°C to 25°C in this embodiment. Quick bonding is completed in a time range of 10s to 3 min. However, a cured state lasting for approximately 10s or above 10s is initial cured. The initial cured achieves an effect of separation that human power cannot achieve, and a fully cured state can be achieved in 3 min.

According to the foregoing production method for a laminated motor core, the adhesive point is located at an outer edge of the core sheet after coating of the adhesive, or
the adhesive point is located at an edge of a shaft hole on the core sheet after coating of the adhesive, or
the adhesive point is located at a periphery of a magnetic steel slot on the core sheet after coating of the adhesive, or
at least one adhesive point is bonded to each of a plurality of tooth portions on the core sheet after coating of the adhesive. When the tooth portion is long, two or three adhesive points may be bonded to each tooth portion. The tooth portion is formed by forming a plurality of slot shapes on the rotor or the stator, and the arrangement of locations of the above adhesive points causes vibration and noise of the motor core to be greatly reduced.

### Embodiment 6

As shown in combination with FIG. 26 to FIG. 31, a production method for a laminated motor core in the present invention includes the following manners:
A rotor core and a stator core are manufactured based on the production device for a laminated motor core and the production method for the same in the foregoing embodiments. The production device sequentially includes a first forming station 2102 for forming a first notch forming hole 2112, a second notch forming hole 2113, and a stator square slot 2111, a second forming station 2103 for forming a vent hole 2114 and a third notch forming hole 2125, a third forming station 2104 for a rotor magnetic steel slot 2115, a rotor center hole 2116, and re-forming a stator square slot 2111, a first adhesive spraying station 2105 with an adhesive spraying apparatus 3, a first material-drop station 2106 for forming a rotor core sheet material 2118, a fourth forming station 2107 for forming a slot-shaped hole 2120 and an elongated hole 2122, a fifth forming station 2108 for forming a stator slot shape and a stator shaft hole, a second adhesive spraying station 2109 with an adhesive spraying apparatus 3, and a second material-drop station 2110 for forming a stator core sheet material 2124. The rotor core sheet and the stator core sheet are formed using the foregoing apparatus, and are coated with adhesive before the core sheets drop. Specific production steps are as follows:
Step S1: Transport a core sheet material 2 in a material-drop direction between an upper mold assembly 11 and a lower mold assembly 12 of the production device in a continuous stepwise manner, and perform synchronous blanking on a plurality of columns of blanking and forming regions 2101 of the core sheet material 2, to form, in each forming region, a notched rotor center hole 2116, a plurality of vent holes 2114 and a plurality of rotor magnetic steel slots 2115 surrounding the rotor center hole 2116, and a plurality of stator square slots 2111 arranged in a loop-shaped array at a periphery of the plurality of rotor magnetic steel slots 2115, where the rotor magnetic steel slots 2115 are located at a periphery of a through hole, so that a rotor core sheet preforming region is defined by a periphery of the rotor magnetic steel slots 2115. This step provides a corresponding structure and conditions for forming a rotor core sheet material 2118 through blanking, and prepares for forming a next rotor core sheet material 2118.
Step S2: Attach, in the continuous stepwise transportation process of the core sheet material 2, the rotor core sheet preforming region to an adhesive spraying apparatus 3 located before a rotor material-drop station in the production device; control the piezoelectric adhesive spraying apparatus 20 to supply adhesive to the adhesive spraying apparatus 3 after an adhesive spraying signal is obtained, that is, control the first piezoelectric adhesive spraying structure 201 to supply adhesive to the first adhesive spraying apparatus to coat a first surface of the core sheet material 2 with a first binding agent, and control the second piezoelectric adhesive spraying structure 202 to supply adhesive to the second adhesive spraying apparatus to coat a second surface of the core sheet material 2 with a second binding agent; and transport the adhesive to a first adhesive spraying opening 301 and a second adhesive spraying opening 302 of the adhesive spraying apparatus 3 through the piezoelectric adhesive spraying apparatus 20, and bond the adhesive ejected by the first adhesive spraying opening 301 and the second adhesive spraying opening 302 to a surface of the core sheet preforming region. In addition, adhesive points 2117 are evenly distributed between the vent holes 2114 and between the rotor magnetic steel slots 2115, where point positions of the first adhesive spraying openings 301 are respectively arranged corresponding to adhesive point positions between the vent holes 2114, and point positions of the second adhesive spraying openings 302 are respectively arranged corresponding to adhesive point positions between the rotor magnetic steel slots 2115, so that effective coating can be performed with adhesive, and the first binding agent is in effective contact with the second binding agent.
Step S3: Blank, in the continuous stepwise transportation process of the core sheet material 2, the rotor core sheet preforming region onto which an adhesive point 2117 is sprayed, to form a rotor core sheet material 2118, and drop the rotor core sheet into a material-drop channel to come into contact with and be cured, bonded, and fixed at a normal temperature to a top surface of a rotor core sheet lamination stack inside the material-drop channel through the first binding agent and the second binding agent, to form a rotor core. In this embodiment, the first binding agent is a mixed liquid in which the punching oil and the accelerator are mixed, and has a function of catalyzing the adhesive, the second binding agent is adhesive, and the adhesive is acrylic anaerobic adhesive; and A support hydraulic cylinder is provided on a lower end surface of the rotor core sheet lamination stack of the material-drop channel. In addition, each time one rotor core sheet material 2118 is blanked, the support hydraulic cylinder is controlled to lower by a distance of a thickness of one rotor core sheet material 2118, making it convenient to laminate and bond a core sheet that is formed through blanking next time. The normal temperature ranges from 15°C to 35°C, and preferably ranges from 20°C to 25°C in this embodiment.
Step S4: Blank, in the continuous stepwise transportation process of the core sheet material 2, a periphery of the material-drop hole 2119, to form a plurality of slot-shaped holes 2120 arranged in a loop-shaped array and form an elongated hole 2122 on an end of the slot-shaped hole 2120 close to the material-drop hole 2119. The forming in this step prepares for forming of the stator slot shape 2123, to avoid distortion caused by direct forming.
Step S5: Blank, in the continuous stepwise transportation process of the core sheet material 2, an edge of the material-drop hole 2119 to form a stator center hole, and remove a part of the elongated hole 2122, so that the slot-shaped hole 2120 communicates with the material-drop hole 2119 to form a stator slot shape 2123, to form a stator core sheet preforming region defined by a periphery of the stator square slot 2111. Through the combination of step S4 and step S5, the stator slot shape 2123 that is formed through blanking is prevented from being deformed, thereby effectively ensuring the quality of the stator core sheet material 2124, and improving the production efficiency and the quality.
Step S6: Attach, in the continuous stepwise transportation process of the core sheet material 2, the stator core sheet preforming region to an adhesive spraying apparatus 3 located before a stator material-drop station in the production device; control the piezoelectric adhesive spraying apparatus 20 to supply adhesive to the adhesive spraying apparatus 3 after an adhesive spraying signal is obtained, that is, control the first piezoelectric adhesive spraying structure 201 to supply adhesive to the first adhesive spraying apparatus to coat a first surface of the core sheet material 2 with a first binding agent, and control the second piezoelectric adhesive spraying structure 202 to supply adhesive to the second adhesive spraying apparatus to coat a second surface of the core sheet material 2 with a second binding agent; and transport the adhesive to a first adhesive spraying opening 301 and a second adhesive spraying opening 302 of the adhesive spraying apparatus 3 through the piezoelectric adhesive spraying apparatus 20, and bond the adhesive ejected by the first adhesive spraying opening 301 and the second adhesive spraying opening 302 to a surface of the core sheet preforming region, to form adhesive points 2117, where the adhesive points 2117 are evenly distributed between the stator slot shapes 2123 and between the stator slot shapes 2123 and the stator square slots 2111 respectively. Point positions of the first adhesive spraying openings 301 are respectively arranged corresponding to adhesive point positions between the stator slot shapes 2123, and point positions of the second adhesive spraying openings 302 are respectively arranged corresponding to adhesive point positions between the stator slot shapes 2123 and the stator square slots 2111, so that effective coating can be performed with adhesive, and the first binding agent is in effective contact with the second binding agent.
Step S7: Perform a rotation of 360 °/N on the stator core sheet lamination stack that has been in the material-drop channel before material-drop of the stator core sheet material 2124, where the coefficient N is 18, so a rotation angle is 20 °; and the coefficient N is not limited thereto, and may be further adaptively adjusted according to the shape of the core sheet; and then blank, in the continuous stepwise transportation process of the core sheet material 2, the stator core sheet preforming region onto which an adhesive point 2117 is sprayed, to form a stator core sheet material 2124 with a contour notch, and drop the stator core sheet into a material-drop channel to come into contact with and be cured, bonded, and fixed at a normal temperature to a top surface of a stator core sheet lamination stack through the first binding agent and the second binding agent, to form a stator core. In this embodiment, the first binding agent is a mixed liquid in which the punching oil and the accelerator are mixed, and has a function of catalyzing the adhesive, the second binding agent is adhesive, and the adhesive is acrylic anaerobic adhesive; and A support hydraulic cylinder is provided on a lower end surface of the stator core sheet lamination stack of the material-drop channel. In addition, each time one stator core sheet is blanked, the support hydraulic cylinder is controlled to lower by a distance of a thickness of one stator core sheet material 2124, making it convenient to laminate and bond a core sheet that is formed through blanking next time.

In this embodiment, Step S2 specifically includes:
Step S21: Perform blanking, on one side of a longitudinal center line at a central position of the forming region and in the continuous stepwise transportation process of the core sheet material 2, to form two symmetrically arranged first notch forming holes 2112, a plurality of second notch forming holes 2113 arranged in a loop-shaped array around the first notch forming holes 2112, and a plurality of stator square slots 2111 arranged in a loop-shaped array around the plurality of second notch forming holes 2113.
Step S22: Perform blanking, in the continuous stepwise transportation process of the core sheet material 2, to form a third notch forming hole 2125 on the other side of the longitudinal center line at the central position of the forming region, and form a plurality of vent holes 2114 arranged in a loop-shaped array in a peripheral region of the first notch forming hole 2112 and the third notch forming hole 2125, where the two first notch forming holes 2112 and the third forming hole are distributed in a loop-shaped array.
Step S23: Form, in the continuous stepwise transportation process of the core sheet material 2, a plurality of notched rotor magnetic steel slots 2115 respectively according to positions of the second notch forming holes 2113, and perform blanking again to form a stator square slot 2111 between the stator square slots 2111, where two adjacent rotor magnetic steel slots 2115 are obliquely arranged and are symmetric to each other.
Step S24: Perform blanking, in the continuous stepwise transportation process of the core sheet material 2, to form a notched rotor center hole 2116 at a central position around which the first notch forming hole 2112 and the third notch forming hole are distributed.

Through the foregoing steps, the stator square slot 2111, the notched rotor magnetic steel slot 2115, the notched rotor center hole 2116, and the vent hole 2114 can be effectively formed, to avoid deformation during forming, and a step of intentionally designing and forming a notch is further omitted, to improve production efficiency.

In this embodiment, between step S4 and step S5, there is a step of forming a stator contour notch forming hole. A square slot forming region is defined by a plurality of stator square slots 2111 arranged in a loop-shaped array. Three notch forming regions arranged in a loop-shaped array are formed in the square slot forming region, and two parallel stator square slots 2111 are provided in each notch forming region. Therefore, the three notch forming regions are blanked to form a fourth notch forming hole. Then, according to preforming of the stator core sheet material 2124, blanking is performed to form a stator core sheet material 2124 with a contour notch in a preforming mode, so that the stator core sheet material 2124 with the contour notch is effectively formed, to avoid deformation, and a step of intentionally forming the contour notch is omitted, to improve production efficiency.

The foregoing embodiment realizes the simultaneous production of a plurality of columns of rotor cores and stator cores; and can satisfy a lamination requirement of a large rotation of the stator cores.

Although the implementation scheme of the present invention has been disclosed above, it is not only limited to the applications listed in the specification and implementations, but also can be applied to various fields suitable for the present invention. For those skilled in the art, additional modifications can be easily realized, so the present invention is not limited to specific details and legends shown and described herein without departing from the scope of the claims.

## Claims

1. A lamination method for an adhesively laminated core, comprising steps:
blanking a continuous core sheet material (2) before a material-drop process;
determining whether a first adhesive spraying signal exists;
parsing, if the first adhesive spraying signal exists, the first adhesive spraying signal, to obtain, in the first adhesive spraying signal, a voltage value representing each adhesive spraying opening (21) of a piezoelectric adhesive spraying apparatus (20);
configuring the voltage value for the adhesive spraying opening (21), to form an electric field with a corresponding voltage value configured at a deformation portion of the adhesive spraying opening (21); and
controlling, according to the electric field, the deformation portion to deform, and pressing a binding agent in the adhesive spraying opening (21), to supply a first binding agent to a first surface of the core sheet material (2) facing a material-drop female mold (121) in a blanking station before material-drop, wherein the first binding agent is used to form a binding force for laminating cores on each other;
determining whether a second adhesive spraying signal exists;
parsing, if the second adhesive spraying signal exists, the second adhesive spraying signal, to obtain, in the second adhesive spraying signal, a voltage value representing each adhesive spraying opening (21) of the piezoelectric adhesive spraying apparatus (20);
configuring the voltage value for the adhesive spraying opening (21), to form an electric field with a corresponding voltage value configured at a deformation portion of the adhesive spraying opening (21); and
controlling, according to the electric field, the deformation portion to deform, and pressing a binding agent in the adhesive spraying opening (21), to supply a second binding agent to a second surface of the core sheet material facing a material-drop male mold (111) in a blanking station, wherein the second binding agent is used to combine with the first binding agent to form a binding force for laminating cores on each other, obtaining a thickness of the current core sheet material (2) through measurement by configuring an online material thickness measuring apparatus,
obtaining, according to the thickness, an amount of adhesive required when the cores are laminated on each other; and
determining, based on the amount of adhesive, an adhesive spraying amount of each adhesive spraying opening (21) of the piezoelectric adhesive spraying apparatus (20), to determine a voltage value corresponding to each adhesive spraying opening (21).

2. The lamination method for an adhesively laminated core according to claim 1, wherein the first binding agent is supplied to the first surface of the core sheet material (2) facing the material-drop female mold (121) in one blanking station before material-drop.

3. The lamination method for an adhesively laminated core according to claim 1, wherein the first binding agent is supplied to the first surface of the core sheet material (2) facing the material-drop female mold (121) in a plurality of blanking stations before material-drop.

4. The lamination method for an adhesively laminated core according to claim 1, wherein in a same adhesive spraying process, at least two different voltage values act on deformation portions of a same type of adhesive spraying openings (21) at different locations, to form different adhesive spraying amounts in different regions on the first surface.

5. The lamination method for an adhesively laminated core according to claim 1, wherein in a same adhesive spraying process, a same voltage value acts on deformation portions of at least two types of adhesive spraying openings (21) at different locations, to form a same adhesive spraying amount in different regions on the first surface.

6. The lamination method for an adhesively laminated core according to claim 1, wherein the second binding agent is supplied to the second surface of the core sheet material (2) facing the material-drop male mold (111) in one blanking station.

7. The lamination method for an adhesively laminated core according to claim 1, wherein the second binding agent is supplied to the second surface of the core sheet material (2) facing the material-drop male mold (111) in a plurality of blanking stations.

8. An adhesively laminated core, formed by laminating and bonding a plurality of core sheets, wherein the core is manufactured using the lamination method for an adhesively laminated core according to any one of claims 1 to 7.

9. A production device for an adhesively laminated core, wherein the production device is configured to produce the adhesively laminated core according to claim 8 and comprises:
a blanking unit, comprising an upper mold assembly and a lower mold assembly, wherein the upper mold assembly and the lower mold assembly act collaboratively to sequentially blank and drop core sheets with a predetermined shape from a stepwise transported core sheet material (2);
a piezoelectric adhesive spraying apparatus (20), mounted on the blanking unit, and configured to supply a first binding agent to a first surface of the core sheet material (2) and supply a second binding agent to a second surface of the core sheet material (2); and
a control unit, configured to perform the lamination method for an adhesively laminated core according to any one of claims 1 to 7.

10. The production device for an adhesively laminated core according to claim 9, further comprising an adhesive spraying apparatus, connected to the piezoelectric adhesive spraying apparatus (20), wherein the adhesive spraying apparatus (20) is arranged corresponding to a surface that is of the core sheet material (2) and that is used for a core sheet forming portion, to spray the first binding agent and/or the second binding agent supplied by the piezoelectric adhesive spraying apparatus (20) to a surface of the core sheet material (2) at a corresponding position.

## Patentansprüche

1. Laminierungsverfahren für einen klebstofflaminierten Kern, folgende Schritte umfassend:
Ausstanzen eines kontinuierlichen Kernblattmaterials (2) vor einem Materialabwurfverfahren;
Bestimmen, ob ein erstes Klebstoffsprühsignal vorhanden ist;
Analysieren, wenn das erste Klebstoffsprühsignal vorhanden ist, des ersten Klebstoffsprühsignals, um in dem ersten Klebstoffsprühsignal einen Spannungswert zu ermitteln, der jeweils eine Klebstoffsprühöffnung (21) einer piezoelektrischen Klebstoffsprühvorrichtung (20) repräsentiert;
Einstellen des Spannungswerts für die Klebstoffsprühöffnung (21), um ein elektrisches Feld mit einem entsprechenden Spannungswert zu erzeugen, der an einem Verformungsabschnitt der Klebstoffsprühöffnung (21) eingestellt ist; und
Steuern, gemäß dem elektrischen Feld, des Verformungsabschnitts, um sich zu verformen und ein Bindemittel in die Klebstoffsprühöffnung (21) zu pressen, um ein erstes Bindemittel einer ersten Oberfläche des Kernblattmaterials (2), die einer Materialabwurfnegativform (121) zugewandt ist, in einer Stanzstation vor dem Materialabwurf zuzuführen, wobei das erste Bindemittel verwendet wird, um eine Bindungskraft zum Laminieren von Kernen aufeinander zu bilden;
Bestimmen, ob ein zweites Klebstoffsprühsignal vorhanden ist;
Analysieren, wenn das zweite Klebstoffsprühsignal vorhanden ist, des zweiten Klebstoffsprühsignals, um in dem zweiten Klebstoffsprühsignal einen Spannungswert zu ermitteln, der jeweils eine Klebstoffsprühöffnung (21) der piezoelektrischen Klebstoffsprühvorrichtung (20) repräsentiert;
Einstellen des Spannungswerts für die Klebstoffsprühöffnung (21), um ein elektrisches Feld mit einem entsprechenden Spannungswert zu erzeugen, der an einem Verformungsabschnitt der Klebstoffsprühöffnung (21) eingestellt ist; und
Steuern, gemäß dem elektrischen Feld, des Verformungsabschnitts, um sich zu verformen, und Pressen eines Bindemittels in der Klebstoffsprühöffnung (21), um ein zweites Bindemittel einer zweiten Oberfläche des Kernblattmaterials, die einer Materialabwurfpositivform (111) zugewandt ist, in einer Stanzstation zuzuführen, wobei das zweite Bindemittel verwendet wird, um mit dem ersten Bindemittel zu kombinieren, um eine Bindungskraft zum Laminieren von Kernen aufeinander zu bilden, Ermitteln einer Dicke des aktuellen Kernblattmaterials (2) durch Messung, indem ein Online-Materialdickenmessgerät eingestellt wird,
Ermitteln einer je nach Dicke erforderlichen Klebstoffmenge, wenn die Kerne aufeinander laminiert werden; und
Bestimmen, basierend auf der Klebstoffmenge, einer Klebstoffsprühmenge jeder Klebstoffsprühöffnung (21) der piezoelektrischen Klebstoffsprühvorrichtung (20), um einen Spannungswert zu bestimmen, der jeweils einer Klebstoffsprühöffnung (21) entspricht.

2. Laminierungsverfahren für einen klebstofflaminierten Kern nach Anspruch 1, wobei das erste Bindemittel der ersten Oberfläche des Kernblattmaterials (2), die der Materialabwurfnegativform (121) zugewandt ist, in einer Stanzstation vor dem Materialabwurf zugeführt wird.

3. Laminierungsverfahren für einen klebstofflaminierten Kern nach Anspruch 1, wobei das erste Bindemittel der ersten Oberfläche des Kernblattmaterials (2), die der Materialabwurfnegativform (121) zugewandt ist, in mehreren Stanzstationen vor dem Materialabwurf zugeführt wird.

4. Laminierungsverfahren für einen klebstofflaminierten Kern nach Anspruch 1, wobei im gleichen Klebstoffsprühverfahren mindestens zwei unterschiedliche Spannungswerte auf Verformungsabschnitte einer gleichen Art von Klebstoffsprühöffnungen (21) an unterschiedlichen Stellen einwirken, um unterschiedliche Klebstoffsprühmengen in unterschiedlichen Bereichen auf der ersten Oberfläche zu bilden.

5. Laminierungsverfahren für einen klebstofflaminierten Kern nach Anspruch 1, wobei im gleichen Klebstoffsprühverfahren ein gleicher Spannungswert auf Verformungsabschnitte von mindestens zwei Arten von Klebstoffsprühöffnungen (21) an unterschiedlichen Stellen einwirkt, um eine gleiche Klebstoffsprühmenge in unterschiedlichen Bereichen auf der ersten Oberfläche zu bilden.

6. Laminierungsverfahren für einen klebstofflaminierten Kern nach Anspruch 1, wobei das zweite Bindemittel der zweiten Oberfläche des Kernblattmaterials (2), die der Materialabwurfpositivform (111) zugewandt ist, in einer Stanzstation zugeführt wird.

7. Laminierungsverfahren für einen klebstofflaminierten Kern nach Anspruch 1, wobei das zweite Bindemittel der zweiten Oberfläche des Kernblattmaterials (2), die der Materialabwurfpositivform (111) zugewandt ist, in mehreren Stanzstationen zugeführt wird.

8. Klebstofflaminierter Kern, der durch Laminieren und Verkleben mehrerer Kernblätter gebildet wird, wobei der Kern unter Verwendung des Laminierungsverfahrens für einen klebstofflaminierten Kern nach einem der Ansprüche 1 bis 7 hergestellt wird.

9. Herstellungsvorrichtung für einen klebstofflaminierten Kern, wobei die Herstellungsvorrichtung dazu ausgelegt ist, den klebstofflaminierten Kern nach Anspruch 8 herzustellen, und Folgendes umfasst:
eine Stanzeinheit, die eine obere Formanordnung und eine untere Formanordnung umfasst, wobei die obere Formanordnung und die untere Formanordnung zusammenwirken, um aufeinanderfolgend Kernblätter mit einer vorbestimmten Gestalt aus einem schrittweise transportierten Kernblattmaterial (2) auszustanzen und abzuwerfen;
eine piezoelektrische Klebstoffsprühvorrichtung (20), die an der Stanzeinheit montiert ist und dazu ausgelegt ist, ein erstes Bindemittel einer ersten Oberfläche des Kernblattmaterials (2) zuzuführen und ein zweites Bindemittel einer zweiten Oberfläche des Kernblattmaterials (2) zuzuführen; und
eine Steuereinheit, die dazu ausgelegt ist, das Laminierungsverfahren für einen klebstofflaminierten Kern nach einem der Ansprüche 1 bis 7 durchzuführen.

10. Herstellungsvorrichtung für einen klebstofflaminierten Kern nach Anspruch 9, ferner umfassend eine Klebstoffsprühvorrichtung, die mit der piezoelektrischen Klebstoffsprühvorrichtung (20) verbunden ist, wobei die Klebstoffsprühvorrichtung (20) entsprechend einer Oberfläche angeordnet ist, die aus dem Kernblattmaterial (2) ist und die für einen Kernblattbildungsabschnitt verwendet wird, um das erste Bindemittel und/oder das zweite Bindemittel, das von der piezoelektrischen Klebstoffsprühvorrichtung (20) zugeführt wird, an einer entsprechenden Position auf eine Oberfläche des Kernblattmaterials (2) zu sprühen.

## Revendications

1. Procédé de stratification pour un noyau stratifié par adhésif, comprenant les étapes suivantes :
découpage d'un matériau de feuille de noyau continu (2) avant une opération de chute de matière ;
détermination qu'il existe ou non un premier signal de projection d'adhésif ;
si le premier signal de projection d'adhésif existe, analyse du premier signal de projection d'adhésif, afin d'obtenir, dans le premier signal de projection d'adhésif, une valeur de tension représentant chaque ouverture de projection d'adhésif (21) d'un appareil de projection d'adhésif piézoélectrique (20) ;
configuration de la valeur de tension pour l'ouverture de projection d'adhésif (21), afin de former un champ électrique avec une valeur de tension correspondante configurée au niveau d'une partie déformation de l'ouverture de projection d'adhésif (21) ; et
contrôle, en fonction du champ électrique, de la partie déformation à déformer, et poussée d'un liant dans l'ouverture de projection d'adhésif (21), afin d'appliquer un premier liant à une première surface du matériau de feuille de noyau (2) faisant face à un moule femelle à chute de matière (121) dans une station de découpage avant la chute de matière, le premier liant étant utilisé pour créer une force de liaison pour la stratification de noyaux les uns sur les autres ;
détermination qu'il existe ou non un deuxième signal de projection d'adhésif ;
si le deuxième signal de projection d'adhésif existe, analyse du deuxième signal de projection d'adhésif, afin d'obtenir, dans le deuxième signal de projection d'adhésif, une valeur de tension représentant chaque ouverture de projection d'adhésif (21) de l'appareil de projection d'adhésif piézoélectrique (20) ;
configuration de la valeur de tension pour l'ouverture de projection d'adhésif (21), afin de former un champ électrique avec une valeur de tension correspondante configurée au niveau d'une partie déformation de l'ouverture de projection d'adhésif (21) ; et
contrôle, en fonction du champ électrique, de la partie déformation à déformer, et poussée d'un liant dans l'ouverture de projection d'adhésif (21), afin d'appliquer un deuxième liant à une deuxième surface du matériau de feuille de noyau faisant face à un moule mâle à chute de matière (111) dans une station de découpage, le deuxième liant étant utilisé pour se combiner avec le premier liant afin de créer une force de liaison pour la stratification de noyaux les uns sur les autres, obtention d'une épaisseur du matériau de feuille de noyau en cours (2) par mesure par configuration d'un appareil de mesure d'épaisseur de matière en ligne,
obtention, en fonction de l'épaisseur, d'une quantité d'adhésif nécessaire lorsque les noyaux sont stratifiés les uns sur les autres ; et
détermination, sur la base de la quantité d'adhésif, d'une quantité de projection d'adhésif de chaque ouverture de projection d'adhésif (21) de l'appareil de projection d'adhésif piézoélectrique (20), afin de déterminer une valeur de tension correspondant à chaque ouverture de projection d'adhésif (21).

2. Procédé de stratification pour un noyau stratifié par adhésif selon la revendication 1, dans lequel le premier liant est appliqué à la première surface du matériau de feuille de noyau (2) faisant face au moule femelle à chute de matière (121) dans une station de découpage avant la chute de matière.

3. Procédé de stratification pour un noyau stratifié par adhésif selon la revendication 1, dans lequel le premier liant est appliqué à la première surface du matériau de feuille de noyau (2) faisant face au moule femelle à chute de matière (121) dans une pluralité de stations de découpage avant la chute de matière.

4. Procédé de stratification pour un noyau stratifié par adhésif selon la revendication 1 dans lequel, dans une même opération de projection d'adhésif, au moins deux valeurs de tension différentes agissent sur des parties déformation d'un même type d'ouvertures de projection d'adhésif (21) à différents emplacements, afin de constituer différentes quantités de projection d'adhésif dans différentes régions sur la première surface.

5. Procédé de stratification pour un noyau stratifié par adhésif selon la revendication 1 dans lequel, dans une même opération de projection d'adhésif, une même valeur de tension agit sur des parties déformation d'au moins deux types d'ouvertures de projection d'adhésif (21) à différents emplacements, afin de constituer une même quantité de projection d'adhésif dans différentes régions sur la première surface.

6. Procédé de stratification pour un noyau stratifié par adhésif selon la revendication 1, dans lequel le deuxième liant est appliqué à la deuxième surface du matériau de feuille de noyau (2) faisant face au moule mâle à chute de matière (111) dans une station de découpage.

7. Procédé de stratification pour un noyau stratifié par adhésif selon la revendication 1, dans lequel le deuxième liant est appliqué à la deuxième surface du matériau de feuille de noyau (2) faisant face au moule mâle à chute de matière (111) dans une pluralité de stations de découpage.

8. Noyau stratifié par adhésif, formé par stratification et collage d'une pluralité de feuilles de noyau, le noyau étant fabriqué au moyen du procédé de stratification pour un noyau stratifié par adhésif selon l'une quelconque des revendications 1 à 7.

9. Dispositif de fabrication pour un noyau stratifié par adhésif, le dispositif de fabrication étant conçu pour fabriquer le noyau stratifié par adhésif selon la revendication 8 et comprenant :
une unité de découpage, comprenant un ensemble moule supérieur et un ensemble moule inférieur, l'ensemble moule supérieur et l'ensemble moule inférieur agissant en collaboration pour découper et faire chuter successivement des feuilles de noyau avec une forme prédéterminée à partir d'un matériau de feuille de noyau transporté pas à pas (2) ;
un appareil de projection d'adhésif piézoélectrique (20) monté sur l'unité de découpage et conçu pour appliquer un premier liant à une première surface du matériau de feuille de noyau (2) et appliquer un deuxième liant à une deuxième surface du matériau de feuille de noyau (2) ; et
une unité de commande, conçue pour effectuer le procédé de stratification pour un noyau stratifié par adhésif selon l'une quelconque des revendications 1 à 7.

10. Dispositif de fabrication pour un noyau stratifié par adhésif selon la revendication 9, comprenant en outre un appareil de projection d'adhésif relié à l'appareil de projection d'adhésif piézoélectrique (20), l'appareil de projection d'adhésif (20) étant disposé en correspondance avec une surface qui appartient au matériau de feuille de noyau (2) et qui est utilisée pour une partie formation de feuille de noyau, afin de projeter le premier liant et/ou le deuxième liant fournis par l'appareil de projection d'adhésif piézoélectrique (20) sur une surface du matériau de feuille de noyau (2) à une position correspondante.
